# EUROPÄISCHE PATENTSCHRIFT

(11) **EP 1 042 748 B1**
(45) Veröffentlichungstag und Bekanntmachung des Hinweises auf die Patenterteilung: **06.02.2002**
(21) Anmeldenummer: 98966342.2
(22) Anmeldetag: 16.12.1998
(51) Int. Cl.: G11B 5/702

(54) **MAGNETISCHER AUFZEICHNUNGSTRÄGER AUF DER BASIS EINES HYDROXYL- UND AMINOGRUPPENHALTIGEN POLYURETHANPRÄPOLYMERS**
MAGNETIC RECORDING MEDIUM BASED ON A POLYURETHANE PREPOLYMER CONTAINING HYDROXYL AND AMINO GROUPS
SUPPORT D'ENREGISTREMENT MAGNETIQUE A BASE D'UN PREPOLYMERE POLYURETHANE CONTENANT DES GROUPES HYDROXYLE ET AMINO

(30) Priorität: 23.12.1997 DE 19757670
(43) Veröffentlichungstag der Anmeldung: 11.10.2000
(73) Patentinhaber: EMTEC Magnetics GmbH, 67059 Ludwigshafen (DE)
(72) Erfinder: LEHNER, August, D-67127 Rödersheim-Gronau (DE); KOHL, Albert, D-67229 Laumersheim (DE); KRESS, Ria, D-67063 Ludwigshafen (DE); WÜNSCH, Thomas, D-67346 Speyer (DE); WEINGART, Franz, Nagoya 465 (JP)
(74) Vertreter: Honeit, Ute
(86) Internationale Anmeldenummer: EP9808242
(87) Internationale Veröffentlichungsnummer: WO9934357

(56) Entgegenhaltungen:
- DE-A- 3 227 164
- DE-A- 3 929 165
- DE-A- 4 039 748

## Beschreibung

Die vorliegende Erfindung betrifft magnetische Aufzeichnungsträger aus einem nichtmagnetischen Trägermaterial und einer darauf befindlichen, magnetisierbaren Schicht, welche ein feinverteiltes magnetisches Material in einem Bindemittel dispergiert enthält, wobei das Bindemittel wenigstens ein Polyurethanharz enthält, welches durch Vernetzung wenigstens eines Polyisocyanates mit wenigstens einem aktive Wasserstoffatome enthaltenden Polyurethanpräpolymer erhältlich ist.

Magnetische Aufzeichnungsträger haben als Medien zur Aufnahme und Wiedergabe von Ton- und Bildinformationen sowie von Daten eine breite Anwendung gefunden. Die ständig steigenden Anforderungen, welche an diese Aufzeichnungsträger gestellt werden, machen kontinuierliche Verbesserungen in magnetischer und elektroakustischer Hinsicht nötig. So erfordert die Entwicklung in Richtung höherer Aufzeichnungsdichten bei allen genannten Anwendungsformen die Herstellung immer dünnerer Magnetschichten. Aus diesem Grunde muss sowohl die Packungsdichte des magnetischen Materials in der Magnetschicht, die remanente Magnetisierung in Aufzeichnungsrichtung, die gleichmäßige Verteilung des magnetischen Materials in der Schicht sowie die Oberflächenglätte und die Gleichmäßigkeit der Schicht in hohem Maße gegeben sein, denn die originalgetreue Speicherung von Signalen stellt hohe Anforderungen an die Qualität einer Magnetschicht. Eine Magnetschicht muss sowohl hohe als auch tiefe Frequenzen amplitudengetreu speichern und wiedergeben können.

Um diese Eigenschaften zu erzielen, muss neben einer extrem gleichmäßigen Verteilung des magnetischen Pigmentes im organischen Bindemittel die Schicht in Aufzeichnungsrichtung magnetisch hochempfindlich sein. Dazu wird die Anisotropie der nadelförmigen Pigmentteilchen ausgenützt. Eine flüssige Dispersion aus Magnetpulver und organischer Bindemittellösung wird nach der Beschichtung eines inerten Trägers einem Magnetfeld ausgesetzt, so dass die magnetisierbaren Nadeln in Aufzeichnungsrichtung gedreht werden. Durch den darauf unmittelbar folgenden Trockenvorgang wird die Lage der Teilchen im Bindemittelfilm festgelegt. Ein Maß für die erzielte magnetische Ausrichtung und damit auch für die Empfindlichkeit des Speichers ist das Verhältnis der remanenten Induktion B_{R} zur Sättigungsinduktion B_{S} der trockenen Magnetschicht, gemessen in Aufzeichnungsrichtung.

Die Verteilung des magnetischen Pigments im organischen Bindemittel und seine Ausrichtung im magnetischen Feld wird von der Natur des verwendeten Polymeren beeinflusst. Dies tritt besonders stark bei der Verwendung feinteiliger Pigmente in Erscheinung.

Die Auswahl an organischen Bindemitteln und ihren Kombinationen für Magnetpulver ist groß. Bekannt ist z.B. die Verwendung von Polyacrylaten, Polyamiden, Polyestem, Polyurethanen, Phenoxyharzen. Mischpolymerisaten aus Vinylchlorid/Acrylnitril und Copolymerisaten aus Vinylchlorid, Vinylacetat und Vinylalkohol. Der größere Teil der aufgeführten Polymeren ist relativ hart und spröde. Die übliche mechanische Beanspruchung der Magnetschicht erfordert jedoch eine elastische, oftmals weichere Einstellung. Daher werden häufig Polyurethanelastomere mit relativ spröden Polymeren, wie Phenoxyharzen, Vinylchlorid-Vinylacetat-Copolymeren, Polycarbonat u. a. kombiniert oder aber Weichmacher in die Schicht eingebracht. Solche Polyurethane können durch Umsetzung von hydroxylgruppenhaltigen Polyethem oder Polyestem mit Polyisocyanaten hergestellt werden. Üblicherweise werden Polyesterurethanelastomere, wie sie beispielsweise in der DE-A-11 06 959 beschrieben sind, oder Polyetherurethanelastomere, wie sie in der US-A-2 899 411 beschrieben sind, eingesetzt. Zur Verbesserung der Laufeigenschaften werden die oben angeführten Polymermischungen häufig mit Polyisocyanaten vernetzt. Deshalb besitzen auch die mitverwendeten Hartharze häufig OH-Gruppen.

Die DE-A-32 27 164 beschreibt magnetische Aufzeichnungsträger, die ein Bindemittel für das magnetische Material enthalten, welches durch Vernetzung eines Polyisocyanates mit einem hydroxylgruppenhaltigen Polyurethanpräpolymer erhältlich ist. Bei dem Polyurethanpräpolymer handelt es sich um ein thermoplastisches Polyhamstoffurethan mit einer OH-Zahl zwischen 10 und 120, welches aus den Komponenten
IA. 1 Mol eines Polydiols mit einem Molekulargewicht zwischen 400 und 4 000,
IB. 0,2 bis 10 Mol eines Diols mit 2 bis 18 Kohlenstoffatomen,
IC. 0,1 bis 4 Mol eines primären oder sekundären Aminoalkohols mit 2 bis 20 Kohlenstoffatomen,
ID. gegebenenfalls 0,01 bis 1 Mol eines Triols mit 3 bis 18 Kohlenstoffatomen und
II. 1,20 bis 13 Mol eines Diisocyanats mit 6 bis 30 Kohlenstoffatomen, wobei der Anteil der NCO-Gruppen des Diisocyanats, bezogen auf die Komponenten IA bis ID, 65 bis 95 % der äquivalenten Menge an OH- und NH-Gruppen beträgt,
hergestellt wird.

Dabei kann die Komponente IB ganz oder teilweise durch Diamine oder Aminoalkohole mit primären oder sekundären Aminogruppen, entsprechend der Komponente IC, ersetzt werden. Diese Komponenten dienen dabei nicht der Herstellung von Polyurethanpräpolymeren, mit freien, endständigen primären oder sekundären Aminogruppen, sondern der Bildung von hydroxylgruppenhaltigen Hamstoffgruppen an den Kettenenden des Polyurethanpräpolymers. Die DE-A-32 27 136 hat einen dazu analogen Offenbarungsgehalt, wobei ein Bindemittelgemisch aus einem hydroxylgruppenhaltigen Polyhamstoffurethan und einem physikalisch trocknenden Bindemittel auf Basis von Vinylformalgruppen eingesetzt wird.

Die DE-A-39 29 164 beschreibt magnetische Aufzeichnungsträger, die ein Polyurethanbindemittel auf Basis eines fluorgruppenhaltigen, in Tetrahydrofuran löslichen, isocyanatgruppenfreien, verzweigten Polyurethans mit hydroxylgruppenhaltigen Harnstoffgruppen an den Kettenenden und einem Molekulargewicht zwischen 4 000 und 30 000 enthalten. Dieses Polyurethanbindemittel wird aus
A) 1 Mol eines Polyols mit einem Molekulargewicht zwischen 400 und 4 000,
B) 0,3 bis 9 Mol eines Diols mit 2 bis 18 Kohlenstoffatomen,
C) 0,01 bis 1 Mol eines Triols mit 3 bis 18 Kohlenstoffatomen,
D) 0,001 bis 0,4 Mol einer Perfluorverbindung mit zwei gegenüber Isocyanaten reaktiven Endgruppen und einem Molgewicht zwischen 300 und 4 000,
E) 1,25 bis 13 Mol eines Diisocyanats mit 6 bis 30 Kohlenstoffatomen, wobei das Verhältnis NCO:OH in der Summe der Komponenten A, B, C und D 1,05:1,0 bis 1,4:1,0 beträgt, und
F) 0,05 bis 4 Mol eines OH-gruppenhaltigen, gegenüber Isocyanaten reaktiven, primären oder sekundären Amins
hergestellt. Zur Bildung von Präpolymeren mit Hydroxylgruppen an den Kettenenden werden dabei die Komponenten A bis E zu einem isocyanatgruppenhaltigen Zwischenprodukt umgesetzt und dieses anschließend mit einem Aminoalkohol F umgesetzt. Dabei wird ausschließlich die Bildung von Hydroxylgruppen-terminierten Polyurethanhamstoffelastomeren angestrebt. Polyurethanpräpolymere, welche freie Hydroxyl- und freie Aminogruppen aufweisen, werden nicht beschrieben. Die DE-A-39 29 165 besitzt einen dazu analogen Offenbarungsgehalt, wobei abweichend als Komponente D 0,01 bis 0,4 Mol einer organofunktionellen Polysiloxanverbindung mit zwei gegenüber Isocyanaten reaktiven Endgruppen und einem Molekulargewicht zwischen 300 und 4 000 eingesetzt wird.

Die DE-A-40 39 748 beschreibt magnetische Aufzeichnungsträger, die ein Bindemittel auf Basis eines thermoplastischen, in Tetrahydrofuran löslichen, isocyanatgruppenfreien, verzweigten Polyurethanpräpolymers mit Sulfonatgruppen entlang der Polyurethanzweige sowie hydroxylgruppenhaltigen Hamstoffgruppen an den Kettenenden enthalten. Die Herstellung der hydroxylgruppenhaltigen Polyurethanpräpolymere erfolgt dabei wie in der DE-A-39 29 164 beschrieben, wobei anstelle einer Perfluorverbindung ein mindestens eine Sulfonatgruppe aufweisendes Diol eingesetzt wird.

Im allgemeinen erfolgt die Herstellung der magnetischen Aufzeichnungsträger durch Auftragen einer Dispersion des magnetischen Materials in einer Lösung des Bindemittels auf den nichtmagnetischen Träger. Dabei wird in der Regel ein hoher Anteil der Polyisocyanatkomponente von 50 bis zu 200 Mol-%, bezogen auf das zu vernetzende Polyurethanpräpolymer, eingesetzt. Die Trocknung der Magnetschicht erfolgt üblicherweise durch Hindurchführen der beschichteten Folien zwischen geheizten Walzen. Aufgrund der großen Polyisocyanatmenge sowie der allgemein üblichen hohen Beschichtungsgeschwindigkeiten von bis zu 1 000 m/min und der hohen Trockentemperaturen von bis zu 120 °C/min führt eine zu langsame Anbindung der Polyisocyanatkomponente an das Polyurethanpräpolymer zu Ablagerungen an den Walzen und somit zu hohen Fehlerzahlen bei der Bandherstellung. Zudem werden die Magnetschichten in der Regel unter Anwendung eines Liniendrucks von bis zu 300 kg/cm und erhöhten Temperaturen von bis zu 120°C durch Kalandrieren verdichtet und geglättet. Eine unzureichende Anbindung der Polyisocyanatkomponente kann dabei zu Ablagerungen auf den Kalanderwalzen und unter Umständen dann ebenfalls zu so hohen Fehlerzahlen führen, dass die resultierenden Magnetbänder den heutigen technischen Ansprüchen nicht mehr genügen. Die zuvor genannten Bindemittel, welche ein Polyurethanharz enthalten, das durch Vernetzung eines Polyisocyanates mit einem hydroxylgruppenhaltigen Polyurethanpräpolymer hergestellt wird, sind im Hinblick auf die schnelle Anbindung des Polyisocyanates an das Präpolymer und somit die möglichst schnelle Erzielung einer klebefreien Oberfläche verbesserungswürdig.

Der vorliegenden Erfindung liegt daher die Aufgabe zugrunde, einen neuen magnetischen Aufzeichnungsträger zur Verfügung zu stellen, der ein Bindemittel umfasst, welches hohe Geschwindigkeiten und/oder hohe Temperaturen bei der Beschichtung sowie gegebenenfalls auch bei der Kalandrierung von Magnetfolien ermöglicht.

Überraschenderweise wurde nun gefunden, dass die Aufgabe gelöst wird, wenn man in magnetischen Aufzeichnungsträgem ein Bindemittel einsetzt, welches wenigstens ein Polyurethanharz enthält, das durch Vernetzung wenigstens eines Polyisocyanates mit wenigstens einem Polyurethanpräpolymer hergestellt wird, welches wenigstens zwei Hydroxylgruppen und wenigstens eine primäre oder sekundäre Aminogruppe aufweist.

Gegenstand der vorliegenden Erfindung ist daher ein magnetischer Aufzeichnungsträger, umfassend ein nichtmagnetisches Trägermaterial und darauf wenigstens eine magnetisierbare Schicht, welche ein feinverteiltes magnetisches Material in einem Bindemittel dispergiert enthält, wobei das Bindemittel wenigstens ein Polyurethanharz PU) enthält, welches durch Vernetzung wenigstens eines Polyisocyanates A) mit wenigstens einem isocyanatgruppenfreien, wenigstens drei aktive Wasserstoffatome enthaltenden Polyurethanpräpolymer B) erhältlich ist, der dadurch gekennzeichnet ist, dass das Polyurethanpräpolymer B) wenigstens zwei Hydroxylgruppen und wenigstens eine primäre und/oder sekundäre Aminogruppe aufweist.

Die erfindungsgemäßen magnetischen Aufzeichnungsträger enthalten als Bindemittel ein Polyurethanharz PU), welches als alleiniges Bindemittel oder als Komponente eines Bindemittelgemisches eingesetzt werden kann. Diese Polyurethanharze PU) werden durch Vernetzung eines Polyisocyanates A) und eines Polyurethanpräpolymers B) erhalten.

Ohne sich festlegen zu wollen wird angenommen, daß die erfindungsgemäß eingesetzten Polyurethanpräpolymere B), welche wenigstens eine primäre und/oder sekundäre Aminogruppe aufweisen, im allgemeinen eine Umsetzung eines Teils der Isocyanatgruppen des Polyisocyanates A) mit den Aminogruppen der Präpolymere B) vor der Beschichtung des nichtmagnetischen Trägermaterials ermöglichen. Somit entsteht aus den Komponenten A) und B) vor der Beschichtung des nichtmagnetischen Trägermaterials teilweise oder auch vollständig ein Einkomponentensystem. Dabei wird die Komponente A) an die Komponente B) angelagert, wobei eine Vemetzung aber ganz oder teilweise unterbleibt. Die Reaktion der Hydroxylgruppen des Polyurethanpräpolymers B) mit noch vorhandenen freien Isocyanatgruppen des Polyisocyanates A) findet dann zumindest teilweise, bevorzugt im wesentlichen, nach der Beschichtung des nichtmagnetischen Trägermaterials statt.

### Polyisocyanat A)

Geeignete Polyisocyanate A) sind ausgewählt unter Verbindungen mit 2 bis 5 Isocyanatgruppen, Isocyanatpräpolymeren mit einer mittleren Anzahl von 2 bis 5 Isocyanatgruppen, und Mischungen davon. Dazu zählen zum einen organische Di-, Tri- und Polyisocyanate.

Geeignete Diisocyanate A) sind z. B. Tetramethylendiisocyanat, Hexamethylendiisocyanat, 2,3,3-Trimethylhexamethylendiisocyanat, 1,4-Cyclohexylendiisocyanat, Isophorondiisocyanat, 1,4-Phenylendiisocyanat, 2,4- und 2,6-Toluylendiisocyanat und deren Isomerengemische, 1,5-Naphthylendiisocyanat, 2,4- und 4,4'-Diphenylmethandiisocyanat. Ein geeignetes Triisocyanat A) ist z.B. Triphenylmethan-4,4',4"-triisocyanat. Geeignet sind weiterhin Präpolymere mit zwei freien Isocyanatgruppen aus mindestens zwei gleichen oder verschiedenen Diisocyanaten und den im Folgenden genannten Diolen und Polydiolen.

Bevorzugt sind Isocyanatpräpolymere mit einem zahlenmittleren Molekulargewicht bis zu etwa 10 000, vorzugsweise in einem Bereich von etwa 500 bis 3 000. Diese werden z. B. durch Addition der zuvor genannten Isocyanate an polyfunktionelle hydroxyl- oder aminogruppenhaltige Verbindungen erhalten. Bevorzugt werden Polyisocyanate auf der Basis von Toluylendiisocyanat, Hexamethylendiisocyanat und/oder Isophorondiisocyanat eingesetzt, die durch Polyaddition an Di- oder Triole oder durch Biureth- oder Isocyanuratbildung entstehen. Geeignete Diole und Triole werden im Folgenden als Komponenten c) und e) beschrieben. Besonders bevorzugt sind Additionsprodukte von Toluylendiisocyanat an Trimethylolpropan und/oder an Diole, wie Diethylenglykol, 1,3-Butandiol, 1,4-Butandiol, Neopentylglykol, und Gemischen davon.

Werden als Komponente A) niedermolekulare Polyisocyanate eingesetzt, so weisen diese eine Schmelztemperatur von höchstens 100°C, bevorzugt höchstens 70°C auf. Werden Isocyanatpräpolymere eingesetzt, so weisen diese eine Erweichungstemperatur, bestimmt nach Vicat von höchstens 100°C, bevorzugt höchstens 80 °C auf.

Polyurethanpräpolymere B) weisen im allgemeinen eine Alkoholzahl im Bereich von etwa 20 bis 120, bevorzugt 25 bis 100, insbesondere 30 bis 70 auf. Die Aminzahl liegt im allgemeinen im Bereich von etwa 6 bis 45, bevorzugt 8 bis 25. Das Verhältnis von Aminzahl zu Hydroxylzahl liegt in einem Bereich von 1:7,5 bis 1:1,5, bevorzugt 1:6 bis 1:1,8. Vorzugsweise liegt das zahlenmittlere Molekulargewicht der Polyurethanpräpolymere B) in einem Bereich von etwa 500 bis 60 000, bevorzugt 1 000 bis 50 000, insbesondere 2 000 - 30 000. Nach einer bevorzugten Ausführungsform sind mindestens 50 %, bevorzugt mindestens 70 %, insbesondere mindestens 80 % der Hydroxylgruppen der Polyurethanpräpolymere B) Teil einer Harnstoffgruppe der Formel

-NH-CO-NR¹-R²-OH

oder 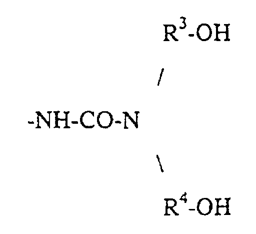 worin
- R¹: für Wasserstoff oder einen C₁- bis C₄-Alkylrest, bevorzugt C₁- bis C₂-Alkyl, steht,
- R², R³ und R⁴: unabhängig voneinander für geradkettige oder verzweigte C₁- bis C₁₀-Alkylreste stehen.

Polyurethanpräpolymere B), die an ihren Kettenenden solche Harnstoffgruppen mit terminalen Hydroxylgruppen aufweisen. besitzen im allgemeinen eine verbesserte Haftfähigkeit gegenüber Polymeren, die diese Endgruppen nicht aufweisen. Eine Variation von Harnstoffgruppen mit einer bzw. zwei terminalen Hydroxylgruppen ermöglicht es, den Gehalt an Hydroxylendgruppen im Präpolymer B) und somit den Vemetzungsgrad mit dem Polyisocyanat A) zu beeinflussen. Dieser kann entsprechend den Anforderungen an die Magnetschicht in weiten Grenzen variiert werden. Des weiteren verbessern Hamstoffgruppen im Präpolymer im allgemeinen die mechanischen Eigenschaften der Schicht und deren Haftfestigkeit.

Das Molmengenverhältnis der Isocyanatgruppen von A) zu primären oder sekundären Aminogruppen von B) beträgt im allgemeinen etwa 1 : 0,4 bis 1 : 0,1, bevorzugt etwa 1 : 0,3 bis 1 :0,15.

Das Molmengenverhältnis der Isocyanatgruppen von A) zur Summe aus primären und/oder sekundären Aminogruppen und Hydroxylgruppen von B) beträgt im allgemeinen etwa 0,5 : 1 bis 2 : 1, bevorzugt etwa 0,8 : 1 bis 1,5 : 1.

Die erfindungsgemäß als Bindemittel in den magnetischen Aufzeichnungsträgem eingesetzten, vernetzten Polyurethanpräpolymere B) haben im allgemeinen eine Pendelhärte nach DIN 53157 von etwa 20 bis 130 s. Sie weisen ferner einen E-Modul (Elastizitätsmodul gemäß DIN 53457) im Bereich von etwa 50 bis 2 500 Nmm⁻², eine Reißdehnung > 10 % (DIN 53455) und eine Reißfestigkeit zwischen 20 und 70 Nmm⁻² (DIN 53455) auf. Besonders günstig ist eine Pendelhärte (DIN 53157) von etwa 25 bis 125 s, ein E-Modul von etwa 55 bis 2 000 Nmm⁻², eine Reißdehnung von etwa 25 bis 200 % und eine Reißfestigkeit von etwa 25 bis 70 Nmm⁻².

Die erfindungsgemäß eingesetzten Polyurethanpräpolymere B) sind im allgemeinen thermoplastisch, in Tetrahydrofuran löslich und isocyanatgruppenfrei. Sie sind aufgebaut aus mindestens einem Diisocyanat und Verbindungen, die ein oder mehrere aktive Wasserstoffatome pro Molekül enthalten , nämlich
(i) wenigstens einer Aminkomponente, ausgewählt unter:
   a) Aminen mit 1 bis 10, bevorzugt 1 bis 4, primären und/oder sekundären Aminogruppen pro Molekül,
      und
   b) Polyaminen mit mindestens 2 primären und/oder sekundären Aminogruppen; und
(ii) wenigstens einer Alkoholkomponente, ausgewählt unter
   c) Diolen mit 2 bis 18 Kohlenstoffatomen,
   d) Aminoalkoholen mit mindestens einer primären oder sekundären Aminogruppe, und
   e) Triolen und/oder Polyolen mit 3 bis 25 Kohlenstoffatomen; und gegebenenfalls
(iii) wenigstens einer weiteren reaktiven Komponente, ausgewählt unter
   f) Verbindungen mit mindestens zwei endständigen Hydroxylgruppen und ggf. mindestens einer weiteren funktionellen Gruppe, ausgewählt unter α,β-ethylenisch ungesättigten Doppelbindungen und Epoxyfunktionen, und
   g) Polymeren mit mindestens zwei endständigen Hydroxyl- und/oder Aminogruppen, die zusätzlich wenigstens eine polare funktionelle Gruppe aufweisen, die ausgewählt ist unter den Alkalimetall-, Erdalkalimetall- und Ammoniumsalzen von Carbonsäuregruppen, Sulfonsäuregruppen, Phosphonsäuregruppen und Phosphorsäuregruppen, Aminogruppen und quaternären Ammoniumgruppen.

Nach einer bevorzugten Ausführungsform sind die erfindungsgemäß eingesetzten Polyurethanpräpolymere B) aufgebaut aus
a) 0,2 bis 5,0 Mol, bevorzugt 0,6 bis 3,0 Mol Aminen,
b) 0 bis 5,0 Mol, bevorzugt 0,6 bis 3,0 Mol Polyaminen,
c) 0,1 bis 15,0 Mol, bevorzugt 0,2 bis 10,0 Mol Diolen
d) 0 bis 6,0 Mol, wie z.B. 0,05 bis 6,0 Mol, bevorzugt 0,1 bis 4,0 Mol Aminoalkoholen
e) 0 bis 2,0 Mol, bevorzugt 0,01 bis 1,0 Mol Triolen und/oder Polyolen,
f) 0 bis 5,0 Mol, bevorzugt 0 bis 2,5 Mol Verbindungen mit mindestens zwei endständigen Hydroxylgruppen und ggf. mindestens einer weiteren funktionellen Gruppe,
g) 0 bis 0,4 Mol, bevorzugt 0,001 bis 0,4 Mol Polymeren mit mindestens zwei endständigen Hydroxyl- und/oder Aminogruppen, die zusätzlich wenigstens eine polare funktionelle Gruppe aufweisen,
sowie 1,2 bis 13 Mol, bevorzugt mindestens 2 Mol wenigstens eines Diisocyanates.

### Komponente a)

Geeignete Amine a) sind geradkettige und verzweigte, aliphatische und cycloaliphatische Amine mit mindestens einer primären und/oder sekundären Aminogruppen pro Molekül, die im allgemeinen etwa 1 bis 30, bevorzugt etwa 1 bis 20 Kohlenstoffatome aufweisen. Dazu zählen z.B. Methylamin, Ethylamin, n-Propylamin, Isopropylamin, n-Butylamin, sec.-Butylamin, tert.-Butylamin, n-Pentylamin, n-Hexylamin, Ethylendiamin, Propylendiamin, 4-Aminopiperidin und dessen Alkylderivate, wie 4-Amino-2,6-dimethylpiperidin, 4-Amino-2,6-diethylpiperidin, 4-Amino-2,6-di-n-propyl-piperidin, 4-Amino-2,6-diisopropylpiperidin, etc., 1-(2-Aminoethyl)piperazin, Ethanolamin, Methylethanolamin, Diethylentriamin, Dipropylentriamin, Triethylentetraamin, 4-Azaheptamethylendiamin und N,N'-Bis(3-aminopropyl)-butan-1,4-diamin, und Mischungen davon. Die Polyurethanpräpolymere B) enthalten die Komponente a) im allgemeinen in einer Menge von 0,2 bis 5,0 Mol, bevorzugt 0,6 bis 3,0 Mol eingebaut.

### Komponente b)

Die Polyurethanpräpolymere können alternativ oder zusätzlich zur Komponente a) wenigstens ein Polyamin b) aufweisen. Geeignete Polyamine b) mit mindestens zwei primären und/oder sekundären Aminogruppen weisen im allgemeinen ein zahlenmittleres Molekulargewicht von etwa 400 bis 4 000, bevorzugt etwa 700 bis 2 500 auf. Dazu zählen z.B. Polyalkylenimine, bevorzugt Polyethylenimine, durch Hydrolyse von Poly-N-vinylamiden, wie z.B. Poly-N-vinylacetamid, erhaltene Vinylamine, Copolymerisate, die α,β-ethylenisch ungesättigte Monomere mit entsprechenden funktionellen Gruppen, z.B. Aminomethylacrylat, Aminoethylacrylat, (N-Methyl)-aminoethylacrylat, (N-Methyl)-aminoethylmethacrylat etc., einpolymerisiert enthalten, sowie α,ω-Diamine auf der Basis von linearen und verzweigten, aminierten Polyalkylenoxiden. Die Polyurethanpräpolymere B) enthalten die Komponente b) im allgemeinen in einer Menge von 0 bis 5,0 Mol, bevorzugt 0,2 bis 5,0 Mol, insbesondere 0,6 bis 3,0 Mol, eingebaut.

### Komponente c)

Als Komponente c) können Diole mit 2 bis 18 Kohlenstoffatomen, vorzugsweise 2 bis 10 C-Atomen, eingesetzt werden, so z.B. 1,2-Ethandiol, 1,3-Propandiol, 1.4-Butandiol, 1,6-Hexandiol, 1,5-Pentandiol, 1,10-Decandiol, 2-Methyl-1,3-propandiol, 2-Methyl-2-butyl-1,3-propandiol, 2,2-Dimethyl-1,3-propandiol, 2,2-Dimethyl-1,4-butandiol, 2-Ethyl-2-butyl-1,3-propandiol, Hydroxypivalinsäureneopentylglykolester, Diethylenglykol und Triethylenglykol. Die Diole können einzeln oder als Gemische verwendet werden. In einer Menge von bis zu 20 Gew.-%, bevorzugt bis zu 10 Gew.-%, bezogen auf die Gesamtmenge an c), können auch Diamine mit 2 bis 15 Kohlenstoffatomen, wie Ethylendiamin, 1,2-Diaminopropan, 1,3-Diaminopropan, 1,4-Diaminobutan. 1,5-Diaminopentan, 1,6-Diaminohexan, 1,7-Diaminoheptan, 1,8-Diaminooctan, 1,9-Diaminononan, 1,10-diaminodecan, 1,11-Diaminoundecan, 1,12-Diaminododecan, 4,9-Dioxododecan-1,12-diamin und/oder 4,4'-Diaminodiphenylmethan eingesetzt werden. Es hat sich als vorteilhaft erwiesen, die dabei entstehenden Harnstoffgruppen in die Polymerkette einzubauen. In gleicher Weise können als Bausteine c) die genannten Diole auch teilweise durch Wasser ersetzt werden. Die Polyurethanpräpolymere B) enthalten die Komponente c) im allgemeinen in einer Menge von etwa 0,1 bis 15 Mol, bevorzugt etwa 0,2 bis 10 Mol.

### Komponente d)

Zur Bildung von Polyurethanpräpolymeren B) mit Hamstoffgruppen an den Kettenenden, die mit Hydroxylgruppen terminiert sind, entsprechend den zuvor angegebenen Formeln, wird ein isocyanatgruppenhaltiges Zwischenprodukt des Präpolymers B), welches die Komponenten a) bis c) und e) bis g) sowie Diisocyanate einpolymerisiert enthalten kann, mit Aminoalkoholen d) umgesetzt. Geeignete Komponenten d) sind Aminoalkohole mit 2 bis 16, vorzugsweise 3 bis 8 Kohlenstoffatomen, wie z. B. Monoethanolamin, Methylisopropanolamin, Ethylisopropanolamin, Methylethanolamin, 3-Aminopropanol, 1-Ethylaminobutan-2-ol, 4-Methyl-4-aminopentan-2-ol, N-(2-Hydroxyethyl)-anilin. Bevorzugt werden Diolamine eingesetzt, da durch ihre Anlagerung am Kettenende die Hydroxylzahl der Polymere verdoppelt wird. Besonders bevorzugt sind Diethanolamin und Diisopropanolamin. Die Polyurethanpräpolymere B) enthalten die Komponente d) im allgemeinen in einer Menge von etwa 0,05 bis 6 Mol, bevorzugt etwa 0,1 bis 4 Mol, eingebaut.

### Komponente e)

Geeignete Triole e) sind Verbindungen mit 3 bis 25, bevorzugt 3 bis 18, insbesondere bevorzugt 3 bis 6 C-Atomen. Beispiele für brauchbare Triole sind Glycerin oder Trimethylolpropan. Geeignet sind auch niedermolekulare Umsetzungsprodukte von Triolen und Polyolen, z. B. von Trimethylolpropan, mit Alkylenoxiden, wie Ethylenoxid und/oder Propylenoxid. Als Polyole lassen sich beispielsweise Erythrit. Pentaerythrit und Sorbit einsetzen. Das Vorhandensein von Triolen und/oder Polyolen bei der Polyaddition führt zu einer Verzweigung des Endprodukts, was sich, sofern keine örtliche Vernetzung auftritt, im allgemeinen positiv auf die mechanischen Eigenschaften des Polyurethans auswirkt. Die Polyurethanpräpolymere B) enthalten die Komponente e) im allgemeinen in einer Menge von etwa 0 bis 2 Mol-%, bevorzugt etwa 0,01 bis 1 Mol-%, einpolymerisiert.

### Komponente f)

Geeignete Komponenten f) zur Herstellung der Polyurethanpräpolymere B) sind z. B. Polymere, wie Polyole, insbesondere Polydiole, mit einem Molekulargewicht von 400 bis 4 000, bevorzugt von 700 bis 2 500. Hierzu eignen sich die bekannten Polyesterole, Polyetherole, Polycarbonatdiole und Polycaprolactondiole.

Geeignete Polyesterole f) sind zweckmäßigerweise überwiegend lineare Polymere mit endständigen OH-Gruppen, bevorzugt solche mit zwei OH-Endgruppen. Die Säurezahl der Polyesterole ist im allgemeinen kleiner als 10 und vorzugsweise kleiner als 3. Die Polyesterole lassen sich in einfacher Weise durch Veresterung von aliphatischen, cycloaliphatischen oder aromatischen Dicarbonsäuren mit 4 bis 15 C-Atomen, vorzugsweise 4 bis 6 C-Atomen, mit Glykolen, bevorzugt Glykolen mit 2 bis 25 C-Atomen oder durch Polymerisation von Lactonen mit 3 bis 20 C-Atomen herstellen. Als Dicarbonsäuren lassen sich beispielsweise Malonsäure, Glutarsäure, Pimelinsäure, Korksäure, Sebacinsäure, Dodecandisäure, Diphensäure, Isophthalsäure, Terephthalsäure, Cyclohexandicarbonsäure und vorzugsweise Adipinsäure, Bernsteinsäure und Phthalsäure einsetzen. Die Dicarbonsäuren können einzeln oder als Gemische verwendet werden. Zur Herstellung der Polyesterole kann es gegebenenfalls vorteilhaft sein, anstelle der Dicarbonsäuren die entsprechenden Säurederivate sowie Carbonsäureanhydride oder Carbonsäurechloride zu verwenden. Geeignet sind auch Mischungen aus aromatischen Dicarbonsäuren, wie Phthalsäure, Terephthalsäure, Isophthalsäure, Diphensäure, oder Mischungen aus diesen mit anderen Dicarbonsäuren, z. B. Sebacinsäure, Bernsteinsäure und Adipinsäure. Beispiele für geeignete Glykole sind Diethylenglykol, 1,5-Pentandiol, 1,10-Decandiol und 2,2,4-Trimethylpentandiol-1,5. Vorzugsweise verwendet werden 1,2-Ethandiol, 1,4-Butandiol, 1,6-Hexandiol und 2,2-Dimethylpropandiol-1,3; 1,4-Dimethylolcyclohexan, 1,6-Dimethylolcyclohexan und 1,4-Diethanolcyclohexan; und ethoxilierte/propoxilierte Produkte des 2,2-Bis-(4-hydroxyphenylen)-propans (Bisphenol A). Je nach den gewünschten Eigenschaften der Polyurethane können die Polyole alleine oder als Mischung in verschiedenen Mengenverhältnissen verwendet werden. Als Lactone für die Herstellung der Polyesterole eignen sich z.B. α,α-Dimethyl-β-propiolacton, γ-Butyrolacton und vorzugsweise ε-Caprolacton.

Besonders bevorzugt werden als Komponente f) Polyesterole, aufgebaut aus 1,4-Dimethylolcyclohexan und/oder 1,6-Dimethylolcyclohexan und einem Gemisch von Terephthalsäure und Isophthalsäure, mit Adipinsäure, Diphensäure, Sebacinsäure und/oder Bemsteinsäure eingesetzt.

Geeignete Polyetherole f) sind im Wesentlichen lineare, endständige Hydroxylgruppen aufweisende Substanzen, die Etherbindungen enthalten und ein Molekulargewicht von etwa 600 bis 4 000, vorzugsweise von 1 000 bis 2 000, besitzen. Geeignete Polyetherole können leicht durch Polymerisation von cyclischen Ethem, wie Tetrahydrofuran, oder durch Umsetzung von einem oder mehreren Alkylenoxiden mit 2 bis 4 Kohlenstoffatomen im Alkylenrest mit einem Startermolekül, das zwei aktive Wasserstoffatome im Alkylenrest gebunden enthält, hergestellt werden. Als Alkylenoxide seien beispielsweise genannt: Ethylenoxid, 1,2-Propylenoxid, Epichlorhydrin, 1,2- und 2,3-Butylenoxid. Die Alkylenoxide können einzeln, alternierend nacheinander oder als Mischung verwendet werden. Als Startermoleküle kommen beispielsweise in Betracht: Wasser, Glykole, wie Ethylenglykol, Propylenglykol, 1,4-Butandiol und 1,6-Hexandiol, Amine, wie Ethylendiamin, Hexamethylendiamin und 4,4'-Diaminodiphenylmethan, und Aminoalkohole, wie Ethanolamin. Ebenso wie die Polyesterole können auch die Polyetherole allein oder als Mischungen eingesetzt werden.

Geeignete Polycarbonatdiole f) sind ebenso wie ihre Herstellung in der US-A-4,131,731 beschrieben, sie sind im allgemeinen auf Hexandiol-1,6-Basis aufgebaut.

Geeignete Komponenten f), die zusätzlich noch mindestens eine weitere funktionelle Gruppe, ausgewählt unter Epoxiden und α,β-ethylenisch ungesättigten Doppelbindungen, aufweisen, sind die Umsetzungsprodukte von Diepoxiden mit α,β-ethylenisch ungesättigten Mono- und/oder Dicarbonsäuren. Polyesteracrylate, Diole, Triole und/oder Polyole mit α,β-ethylenisch ungesättigten Doppelbindungen, epoxiacrylathaltige Polyester oder Polyether, aminmodifizierte Polymere mit mindestens 2 endständigen Hydroxylgruppen, epoxidgruppenhaltige Diole und Polyole, und Mischungen davon. Diese Komponenten f) sind im folgenden bei den Reaktionsvarianten näher beschrieben. Die Polyurethanpräpolymere B) enthalten die Komponente f) im allgemeinen in einer Menge von etwa 0 bis 5 Mol, bevorzugt etwa 0 bis 2,5 Mol, eingebaut.

### Komponente g)

Geeignete Verbindungen g) sind z. B. Diole, die mindestens eine saure Gruppe, wie eine Carbonsäure-, Phosphonsäure-, Phosphorsäure- oder Sulfonsäure-Gruppe, enthalten. Vorzugsweise werden bei allen Komponenten g) nicht die freien Säuregruppen, sondern Salze davon eingesetzt, um eine Salzbildung mit den Aminkomponenten der Präpolymere B) im wesentlichen zu vermeiden. Als carbonsäurehaltiges Diol eignet sich beispielsweise 2,2-Bis(hydroxymethyl)propionsäure. Bevorzugt enthält die Diolkomponente g) mindestens eine Sulfonsäuregruppe oder ein Alkalimetall-, z.B. Li, Na oder K, oder ein Ammoniumsulfat. Dabei können sowohl langkettige Diole mit diesen Substituenten, die an das Kettenende gebunden sind, als auch kurzkettige verzweigte Diole, bei denen diese Gruppen in der abzweigenden Kette, vorzugsweise an deren Ende sitzen, eingesetzt werden.

Geeignete Diole g) sind beispielsweise Verbindungen der Formel (I), wie sie in der DE-A-34 07 562 beschrieben sind,

R¹CH₂O-(C₂H₄O)ₙ(C₃H₇O)ₘCH₂-CHR³-CH₂-SO₃X (I)

wobei
- R¹ =: HO-CH₂-CH(OH)-, R²-C(CH₂OH)₂-,
- R² =: CH₃-, C₂H₅-, C₃H₇-,
- R³ =: H- oder CH₃-,
- X =: H-, Alkali- oder Ammoniumion,
- n =: 0 bis 20,
- m =: 0 bis 20,
- n+m =: 1 bis 20, wobei das Diol insgesamt bis zu 65 C-Atome aufweisen kann,
ist, sowie Diole der Formel (II), wie sie teilweise in der EP-A-414 102 beschrieben sind: 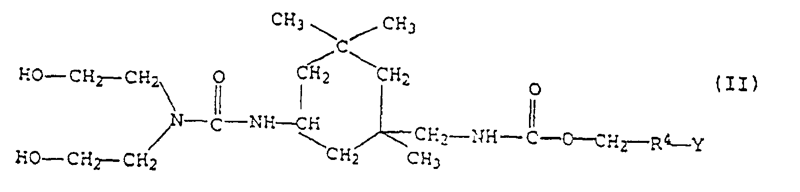 in welcher
- R⁴: einen geradkettigen oder verzweigten oder cyclischen Rest mit 1 bis 10 Kohlenstoffatomen, der gegebenenfalls mit Heteroatomen substituiert sein kann, bedeutet oder

-CH₂-O-(CH₂-CH₂-O)ₙ-(CVH₂-CH(-CH₃)-O)ₘ-CH₂-CHR³-CH₂-,

bedeutet,
worin R³ = H oder CH₃, n = 0 bis 100, m = 0 bis 50 und
n+m = > 1 bedeutet, und
- Y =: =SO₃X, worin X für H, Li, Na, K oder Ammonium steht.

Die Verbindung gemäß Formel (I), in der R¹ für R²-C(CH₂OH)₂-, R² für Ethyl, R³ für H, X für Natrium und m+n für 17 bis 20 stehen, wobei n> m ist, wird als Komponente g) besonders bevorzugt eingesetzt und ist unter dem Warenzeichen Tegomer® DS 3117 (Fa. Goldschmidt) kommerziell erhältlich.

Polyurethanpräpolymere B) mit tertiären Aminogruppen können erhalten werden, wenn man als Komponente g) niedermolekulare Tri- und Polyamine einsetzt, die wenigstens zwei gegenüber Isocyanatgruppen reaktive Gruppen, ausgewählt unter Hydroxylgruppen und primären oder sekundären Aminogruppen, und mindestens eine tertiäre Aminogruppe pro Molekül enthalten. Dazu zählen z. B. Methyl-bis(2-aminoethyl)amin, Ethyl-bis(2-aminoethyl)amin, Methylbis(3-aminopropyl)amin etc. Geladene kationische Gruppierungen lassen sich aus den vorliegenden tertiären Aminstickstoffatomen entweder durch Protonierung, z. B. mit Mineralsäuren oder Carbonsäuren, oder durch Quarternisierung, z. B. mit Alkylierungsmitteln, wie C₁-C₄-Alkylhalogeniden oder Sulfaten, erzeugen. Beispiele solcher Alkylierungsmittel sind Ethylchlorid, Ethylbromid, Methylchlorid, Methylbromid, Dimethylsulfat und Diethylsulfat. Die Polyurethanpräpolymere B) enthalten die Komponente g) im allgemeinen in einer Menge von 0 bis 0,4Mol-%, bevorzugt 0,001 bis 0,4Mol-%, eingebaut.

Geeignete Diisocyanate sind die zuvor als Komponente A) bereits genannten Diisocyanate. Vorzugsweise werden als Diisocyanate 2,4- und 2,6-Toluylendiisocyanat, 2,4- und 4,4-Diphenylmethylendiisocyanat und deren Isomerengemische, Hexamethylendiisocyanat, Isophorondiisocyanat und Mischungen davon eingesetzt.

Die erfindungsgemäß eingesetzten Polyurethanpräpolymere B) enthalten i.a. mindestens 2 Mole der Diisocyanate pro Mol Polymer B) eingebaut.

Das Molmengenverhältnis von Gruppen, die aktive Wasserstoffe aufweisen, d.h. Hydroxylgruppen und/oder primären und sekundären Aminogruppen der Komponenten a) bis g), die zur Reaktion mit Isocyanatgruppen befähigt sind, zu Isocyanatgruppen der Diisocyanate liegt im allgemeinen in einem Bereich von etwa 1,05:1 bis 1.35:1, d.h., die Gruppen mit aktiven Wasserstoffatomen liegen in einem etwa 5 bis 35%igen Überschuss vor, so dass am Ende der Reaktion praktisch kein freies, nicht umgesetztes Isocyanat, aber freie, nicht umgesetzte Hydroxyl- und primäre und/oder sekundäre Aminogruppen verbleiben. Aus praktischen und lacktechnischen Gründen ist es jedoch häufig zweckmäßig, zuerst die Komponenten c), e), f) und/oder g) mit der Diisocyanatkomponente zu einem isocyanatgruppenhaltigen Zwischenprodukt umzusetzen. Dabei wird dann im allgemeinen ein Überschuß an Diisocyanatgruppen von etwa 5 bis 50 Mol-%, bevorzugt etwa 5 bis 40 Mol-%, insbesondere etwa 10 bis 30 Mol-%, eingesetzt. In einem zweiten Reaktionsschritt kann dann die Aminoalkoholkomponente d) mit dem isocyanatgruppenhaltigen Zwischenprodukt umgesetzt werden. wobei, wie zuvor beschrieben, endständige, Hydroxylgruppen-terminierte Hamstoffgruppen in das Polyurethanpräpolymer B) eingeführt werden. Je nach eingesetztem Aminoalkohol erhält man dabei eine oder zwei Hydroxylgruppen je Harnstoffgruppe. Die dabei eingesetzte Menge an Komponente d) ist davon abhängig, auf welche Weise die primären und/oder sekundären Aminogruppen und somit die Komponenten a) und/oder b) in das Polyurethanpräpolymer B) eingeführt werden. Erfolgt dies wie in den im Folgenden beschriebenen Reaktionsvarianten I) und II) durch Umsetzung eines Teils der Aminogruppen der Komponenten a) und/oder b) mit Isocyanatgruppen des Zwischenproduktes von B), so wird das Molmengenverhältnis von Amino- und Hydroxylgruppen der Komponente d) zu Isocyanatgruppen des Zwischenproduktes von B) so gewählt, dass noch ausreichend Isocyanatgruppen für die Reaktion mit den Komponenten a) und/ oder b) vorhanden sind. Erfolgt die Einführung der Aminogruppen in das Präpolymer B) wie in den im Folgenden beschriebenen Reaktionsvarianten III) und IV) nicht durch Reaktion mit den Isocyanatgruppen des Zwischenproduktes, so wird das Mengenverhältnis von Komponente d) zu Isocyanatgruppen des Zwischenproduktes so gewählt, dass die Molmenge an Aminogruppen des Aminoalkohols d) in etwa der Molmenge an Isocyanatgruppen des Zwischenproduktes von B) entspricht. Wird dabei ein geringer Unterschuß von z. B. etwa 1 bis 10 Mol.-% an primären bzw. sekundären Aminogruppen der Komponente d) gegenüber den Isocyanatgruppen eingesetzt, so kann ein Teil des Aminoalkohols in das Molekül eingebaut werden, und es ergibt sich je nach Aminoalkohol eine Verzweigungsstelle im Präpolymer B). Wird ein geringer Überschuß von z.B. etwa 1 bis 10 Mol-% an Aminogruppen eingesetzt, dann wird der Aminoalkohol erst bei der abschließenden Vernetzungsreaktion vollständig in das Polyurethan einpolymerisiert. Damit ist es möglich, das Polymer durch geeignete Variation der Endgruppen an die jeweiligen Anforderungen, wie die Fähigkeit zur Filmbildung oder zur Dispergierung, anzupassen.

### Reaktionsvariante 1)

Nach einer ersten möglichen Reaktionsvariante zur Herstellung der hydroxylgruppen- und aminogruppenhaltigen Polyurethanpräpolymere B) wird zuerst ein isocyanatgruppenhaltiges Zwischenprodukt aus mindestens einem Diisocyanat und mindestens einer zur Reaktion mit diesem befähigten Verbindung, ausgewählt unter den zuvor beschriebenen Komponenten c), e), f) und/oder g), hergestellt. Dieses Zwischenprodukt wird dann, gegebenenfalls nach Isolierung oder Reinigung, mit der Komponente d) und den Komponenten a) und/oder b) umgesetzt. Dabei kann das Zwischenprodukt nach einer geeigneten Ausführungsform zuerst mit einem Unterschuß, bezogen auf Isocyanatgruppen, der Komponente d) umgesetzt werden. Dadurch werden, wie zuvor beschrieben, Hydroxylgruppen-terminierte Hamstoffgruppen in das Präpolymer eingeführt. Die dann noch vorhandenen Isocyanatgruppen können mit den Komponenten a) und/oder b) zu den Polyurethanpräpolymeren B) umgesetzt werden. Dabei werden Amine a) und/oder b) eingesetzt, die mindestens zwei primäre und/oder sekundäre Aminogruppen aufweisen. Dazu zählen z.B. Amine mit einer reaktiven und einer sterisch abgeschirmten Aminogruppe, wie 4-Aminopiperidinderivate, die in 2- und 6-Position einen zusätzlichen Substituenten, wie z.B. C₁-C₆-Alkyl, aufweisen.

Geeignete Amine sind auch die obengenannten Triamine, wie Diethylentriamin. Die Molmengen der Komponenten a), b) und d) werden dabei so gewählt, dass die Alkoholzahl und die Aminzahl des Polyurethanpräpolymers B) im gewünschten Bereich liegen.

Zur Herstellung der Polyurethanpräpolymere B) können die zuvor beschriebenen isocyanatgruppenhaltigen Zwischenprodukte jedoch auch mit Aminen a) und/oder Polyaminen b) umgesetzt werden, die je mindestens eine primäre und eine sekundäre Aminogruppe aufweisen. Vor der Umsetzung mit dem isocyanatgruppenhaltigen Zwischenprodukt werden die primären Aminogruppen der Komponenten a) und/ oder b) durch Umsetzung mit einem Keton in das entsprechende Ketimin überführt. Verfahren zur Herstellung von Ketiminen sind dem Fachmann bekannt und werden z. B. in J. March, Advanced Organic Chemistry, 4. Auflage, Verlag John Wiley & Sons, S. 896 f., und der dort zitierten Literatur beschrieben. Geeignete Ketone sind im allgemeinen mono- oder diaromatische Ketone, wie Acetophenon oder Benzophenon. Die Reaktion erfolgt im allgemeinen unter Entzug des entstehenden Reaktionswassers, z.B. durch azeotrope Destillation oder Zusatz eines Trockenmittels, wie TiCl₄, oder in Gegenwart eines Molekularsiebs. Die Mengen an Ketiminen der Komponenten a) und/oder b) und Aminoalkoholen d) werden wiederum so gewählt, dass das resultierende Polyurethanpräpolymer B) die gewünschte Alkoholzahl und die gewünschte Aminzahl aufweist. Im Anschluß an die Reaktion können die primären Aminogruppen durch Hydrolyse der Ketimine mit wäßrigen Säuren oder gegebenenfalls auch mit wässrigen Basen wieder freigesetzt werden. Die so erhaltenen Polyurethanpräpolymere B) weisen somit immer freie primäre Aminogruppen auf.

### Reaktionsvariante II)

Nach einer zweiten Reaktionsvariante zur Herstellung der Polyurethanpräpolymere B) wird eine Komponente f) eingesetzt, die mindestens zwei endständige Hydroxylgruppen und mindestens eine α,β-ethylenisch ungesättigte Doppelbindung aufweist, wobei es sich vorzugsweise um Umsetzungsprodukte aus einem Diepoxid, wie Bisphenol A, mit wenigstens einer α,β-ethylenisch ungesättigten Mono- und/oder Dicarbonsäure handelt. Geeignete Mono- und/oder Dicarbonsäuren sind z.B. Acrylsäure, Methacrylsäure, Maleinsäure, Furmarsäure, Crotonsäure, Itaconsäure, etc. Die resultierenden Komponenten f) weisen dann z.B. mindestens zwei Hydroxylgruppen und zwei oder mehrere Doppelbindungen auf. Diese Komponenten f) können dann mit mindestens einem Diisocyanat und mindestens einer weiteren Verbindung, ausgewählt unter den zuvor beschriebenen Komponenten c), e) und/oder g) zu einem isocyanatgruppenhaltigen Zwischenprodukt umgesetzt werden, welches zusätzlich noch freie α,β-ethylenisch ungesättigte Doppelbindungen aufweist. Dieses kann dann, wie in Reaktionsvariante I) beschrieben, ggf. nach Isolierung oder Reinigung, mit einem Unterschuß, bezogen auf Isocyanatgruppen, der Komponente d) umgesetzt werden, wodurch Hydroxylgruppen-terminierte Harnstoffgruppen in das Polymer eingeführt werden. Es resultiert ein weiteres Zwischenprodukt, welches noch restliche freie Isocyanatgruppen und Doppelbindungen aufweist. Diese funktionellen Gruppen können mit den Aminkomponenten a) und/oder b) zu den Polyurethanpräpolymeren B) umgesetzt werden. Dabei werden zur Reaktion mit den α,β-ethylenisch ungesättigten Doppelbindungen Amine a) und/oder b) mit gegenüber diesen Doppelbindungen reaktiven primären Aminogruppen eingesetzt. Geeignete Amine sind dabei auch Amine mit nur einer primären Aminogruppe pro Molekül. Die Umsetzung der noch vorhandenen Isocyanatgruppen kann analog zu Reaktionsvariante I) erfolgen, wobei auch die dort beschriebenen Ketimine eingesetzt werden können.

### Reaktionsvariante III)

Nach einer dritten möglichen Reaktionsvariante wird zur Herstellung der hydroxylgruppen- und aminogruppenhaltigen Polyurethanpräpolymere B) eine Polymerkomponente f) eingesetzt, die mindestens zwei endständige Hydroxylgruppen und mindestens eine α,β-ethylenisch ungesättigte Doppelbindung aufweist. Geeignete Polymere f) sind z.B. Polyesteracrylate, die durch Polykondensation von Dicarbonsäuren, Dicarbonsäureanhydriden und -chloriden mit Glykolen und Polyolen und mit α,β-ethylenisch ungesättigten Mono- und Dicarbonsäuren, wie z. B. Acrylsäure, Methacrylsäure, Maleinsäure, Fumarsäure, Crotonsäure, Itaconsäure etc. hergestellt werden können. Geeignete Dicarbonsäuren, Glykole und Polyole sind dabei die zuvor Genannten. Polyesteracrylate können auch durch Polykondensation von Dicarbonsäuren, Dicarbonsäureanhydriden und -chloriden mit Glykolen und Polyolen und mit Diolen, Triolen und/oder Polyolen, die eine oder mehrere α,β-ethylenisch ungesättigte Doppelbindungen aufweisen, hergestellt werden. Geeignete Diole, Triole und/oder Polyole mit α,β-ethylenisch ungesättigten Doppelbindungen sind z.B. Propandiolmonoacrylat, Butandiolmonoacrylat, Propantriolmonoacrylat sowie entsprechende Diacrylate, wie z.B. Diacrylate aus Epikote® 828 der Fa. Shell. Solche Verbindungen, die über mindestens zwei freie Hydroxylgruppen verfügen, können auch gewünschtenfalls als alleinige Alkoholkomponente zur Herstellung eines Polyesters f) mit ethylenisch ungesättigten Doppelbindungen eingesetzt werden.

Diese Polymere f) werden dann analog zu der in Reaktionsvariante II) beschriebenen Vorgehensweise zu Polyurethanpräpolymeren B) umgesetzt.

### Reaktionsvariante IV)

Nach einer vierten Reaktionsvariante zur Herstellung der Polyurethanpräpolymere B) handelt es sich bei der Komponente f) um einen epoxidacrylathaltigen Polyester oder Polyether mit mindestens zwei endständigen Hydroxylgruppen. Zur Herstellung dieser Polymere kann analog zu Reaktionsvariante II) eine epoxidgruppenhaltige Verbindung, z. B. ein Glycidylether, wie Bisphenol A-diglycidylether, oder ein Oligomer davon, mit einer α,β-ethylenisch ungesättigten Mono- oder Dicarbonsäure zu einer Verbindung umgesetzt werden. welche dann sowohl freie Hydroxylgruppen als auch α,β-ethylenisch ungesättigte Doppelbindungen aufweist. Im Falle der Acrylsäure oder Methacrylsäure erhält man so ein Epoxyacrylat oder Epoxymethacrylat. Diese Epoxy(meth)acrylate können dann als Alkoholkomponente zusammen mit den zuvor genannten Dicarbonsäuren, Dicarbonsäureanhydriden oder -chloriden und gegebenenfalls den zuvor genannten Glykolen zu einem Polyester kondensiert werden, welcher noch freie Doppelbindungen aufweist. Dieser kann dann, wie in der Reaktionsvariante III) beschrieben, zu einem aminmodifizierten Polymer f) umgesetzt werden.

Zur Herstellung von aminmodifizierten Polymeren f) mit mindestens zwei endständigen Hydroxylgruppen können auch Polymere mit freien Epoxidgruppen z. B. auf Basis von Glycidyl(meth)acrylaten. mit den Aminkomponenten a) und/oder b) oder mit den ebenfalls zuvor genannten primären Aminen umgesetzt werden, wobei unter Öffnung der Epoxidringe pro Epoxidfunktion des Polymeren eine Hydroxylgruppe und je nach Aminokomponente mindestens eine Amingruppe in das Polymer eingeführt wird.

Die so erhaltene aminmodifizierten Polymere f) können, wie in Reaktionsvariante III) beschrieben, zu einem Polyurethanpräpolymer B) umgesetzt werden.

### Reaktionsvariante V)

Nach einer fünften Reaktionsvariante wird zur Herstellung der Polyurethanpräpolymere B) eine Komponente f) eingesetzt, die wenigstens zwei endständige Hydroxylgruppen und wenigstens eine Epoxyfunktion aufweisen. Geeignete Verbindungen f) sind z.B. Verbindungen, die im Mittel etwa 2 bis 3, z.B. 2,8, Hydroxylgruppen und etwa 1 bis 2, z.B. 1,8, Epoxidgruppen pro Molekül aufweisen. Dazu zählt z.B. Epikote®1001 der Fa. Shell. Diese Komponenten f) können dann mit wenigstens einem Diisocyanat und weiteren Komponenten, ausgewählt unter c), e) und/oder g), zu einem isocyanatgruppenhaltigen Zwischenprodukt umgesetzt werden, welches zusätzlich noch freie Epoxidgruppen aufweist. Dieses kann dann, wie zuvor beschrieben, mit der Komponente d) unter Einführung Hydroxylgruppen-terminierter Harnstoffgruppen zu einem weiteren Zwischenprodukt umgesetzt werden, welches noch freie Isocyanatgruppen und Epoxidgruppen aufweist. Dieses kann dann mit den Aminkomponenten a) und/oder b) zu den Polyurethanpräpolymeren B) umgesetzt werden. Zur Umsetzung mit den Epoxidgruppen eignen sich allgemein die zuvor genannten Amine, auch Amine a) mit nur einer primären Aminogruppe pro Molekül. Die Umsetzung der freien Isocyanatgruppen erfolgt wie in Reaktionsvariante I) beschrieben.

Geeignete Katalysatoren zur Herstellung der Polyurethanpräpolymere B) und für die Vernetzungsreaktion der Komponenten B) und A) sind z. B. tertiäre Amine, wie Triethylamin, Triethylendiamin, N-Methylpyridin und N-Methylmorpholin; Metallsalze wie Zinn-(II)-octoat, Bleioctoat und Zinkstearat, und organische Metallverbindungen, wie Dibutylzinndilaurat. Die geeignete Katalysatormenge ist abhängig von der Wirksamkeit des in Frage kommenden Katalysators. Im allgemeinen hat es sich als zweckmäßig erwiesen, 0,005 bis 0,3 Gewichtsteile, vorzugsweise 0,01 bis 0,1 Gewichtsteile, für jeweils 100 Gewichtsteile Polyurethan einzusetzen.

Die so aufgebauten, thermoplastischen Polyurethanpräpolymere B) können nach einer ersten Verfahrensvariante lösemittelfrei in der Schmelze hergestellt werden. Zu diesem Zweck können die Komponenten in üblichen Apparaturen, z. B. Misch-Knetreaktoren, aufgeschmolzen, vermischt und zur Reaktion gebracht werden. Besonders bevorzugt erfolgt die Herstellung der erfindungsgemäßen Polyurethane in einem Extruder. Es können übliche Extruder verwendet werden, die mit einer oder zwei - gleichsinnig oder gegensinnig drehenden - Schnecken ausgerüstet sind. Vorzugsweise verfügen sie über zusätzliche Knetelemente. Brauchbare Extruder sind beispielsweise die Extruder der ZKS-Serie von Wemer u. Pfleiderer.

Die einzelnen Komponenten können dem Extruder entweder geschmolzen oder in fester Form, beispielsweise als Schuppen, zugeführt werden. Die Bausteine a) bis g) können sowohl außerhalb des Extruders als auch erst im Extruder vermischt werden. Die Zugabe der Diisocyanate kann gegebenenfalls sowohl bereits zu Anfang als auch zu einem späteren Zeitpunkt der Reaktion erfolgen. Die Komponenten d) sowie a) und/oder b) werden vorzugsweise über einen oder mehrere separate Zuläufe dosiert. Wenn verschiedene Isocyanatkomponenten verwendet werden, können diese gegebenenfalls vorgemischt werden. Die Art und Anzahl der Zuläufe sowie die Verweilzeit im Extruder sind von den jeweils erforderlichen Reaktionsbedingungen abhängig, d. h. von der Reaktivität der Komponenten, der Reaktionswärme etc. Die Reaktionstemperatur liegt im allgemeinen im Bereich von 120 bis 200 °C, die zur Anwendung kommende Temperatur bestimmt sich aus den Schmelzpunkten sowie der Löslichkeit der Komponenten und der Temperaturstabilität der Komponenten und des Polyurethanprodukts. Die Temperatur kann während der Reaktion variiert werden, z. B. kann sie von einem Schuss des Extruders zum anderen in zweckmäßiger Weise gesteigert werden. Das aus dem Extruder ausgetragene Produkt wird in üblicher Weise gewonnen und zerkleinert, z. B. unter Wasser granuliert und getrocknet. Gegebenenfalls kann sich eine Temperung bei 50 bis 80 °C anschließen. Während der Lagerung bei Zimmertemperatur oder gegebenenfalls während der Temperung reagieren eventuell noch vorhandene geringe Mengen Isocyanatgruppen ab, so dass in jedem Fall ein isocyanatgruppenfreies Polyurethan resultiert.

Die thermoplastischen, elastischen, hydroxyl- und aminogruppenhaltigen Polyurethanpräpolymere B) werden bevorzugt nach einer zweiten Verfahrensvariante in Lösung nach dem 2-Stufenverfahren, gegebenenfalls in Gegenwart der zuvor genannten Katalysatoren und anderen Hilfsmitteln und/oder Zusatzstoffen, hergestellt. Diese Produkte nach dem lösungsmittelfreien Batchverfahren herzustellen, ist ebenfalls möglich. Da sich bei Anwesenheit von Triolen und/oder Polyolen e) und bei der Reaktion von Aminen mit NCO-Gruppen bei der Substanzpolyaddition zumindest teilweise Gelteilchen bilden können, wird im allgemeinen in Lösung gearbeitet. Allgemein wird bei der Lösungspolyaddition die Gefahr einer örtlichen Übervemetzung, wie sie bei der Substanzpolyaddition auftreten kann, vermieden.

Beim 2-Stufenverfahren sind je nach Reaktionsbedingungen, d.h. zum Beispiel Lösungsmittelmenge, Reaktionswärme, Reaktivität der Komponenten, unterschiedliche Fahrweisen möglich, die sich nur in der ersten Stufe unterscheiden. Beispielhaft seien drei unterschiedliche Fahrweisen dargestellt.

Fahrweise 1: Die Diisocyanatkomponente wird mit etwas Lösungsmittel vorgelegt, dann werden die Bausteine c), e), f) und/oder g) und gegebenenfalls der Katalysator und die Hilfs- und Zusatzstoffe in einem Lösungsmittel bei Temperaturen im Bereich von etwa 20 bis 90 °C, vorzugsweise etwa 30 bis 70 °C, in ca. 0,2 bis 5 Stunden zugegeben. Diese Zugabe kann kontinuierlich oder in einer oder mehreren Portionen erfolgen. Je nach der gewählten Reaktionsvariante wird die dort angegebene Reihenfolge bei der Zugabe der Komponenten eingehalten. Die Komponenten werden bis zum gewünschten NCO-Gehalt umgesetzt, dann wird in der zweiten Stufe ein Abstoppmittel (Komponenten d) und a) und/oder b)) zugesetzt. Die Zugabe dieser Komponenten kann ebenfalls, je nach gewählter Reaktionsvariante, zeitlich versetzt erfolgen.

Fahrweise 2: Bei diesem Verfahren werden die Ausgangskomponenten (c), e), f), g) und Diisocyanate) in einem Teil des Lösungsmittels gelöst, so dass Lösungen mit einem Feststoffgehalt von etwa 15 bis 50 Gew.-% gebildet werden. Anschließend werden die Lösungen unter Rühren auf Temperaturen von etwa 20 bis 90 °C, vorzugsweise von etwa 30 bis 70°C, gegebenenfalls nach der Katalysatorzugabe, erwärmt. Dann werden die Komponenten bis zum gewünschten NCO-Gehalt umgesetzt, danach wird in der zweiten Stufe das Abstoppmittel (Komponenten d) und a) und/oder b)) zugegeben, was wiederum zeitlich versetzt erfolgen kann.

Fahrweise 3: Die Ausgangskomponenten c), e), f) und/oder g) werden mit einem Teil der Diisocyanate (z. B. dem reaktionsträgeren Isocyanat, wenn ein Gemisch aus mehreren Diisocyanaten eingesetzt wird) in einem Teil des Lösungsmittels bei Temperaturen von etwa 20 bis 90 °C, vorzugsweise von etwa 30 bis 70 °C, gegebenenfalls nach der Katalysatorzugabe umgesetzt, bis im Wesentlichen alle Isocyanatgruppen abreagiert sind. Anschließend wird der restliche Teil der Diisocyanate zugegeben und die gesamte Reaktionslösung bis zum gewünschten NCO-Gehalt umgesetzt. Danach wird in der zweiten Stufe das Abstoppmittel (Komponente d) sowie a) und/oder b)) zugesetzt.

Beim 2-Stufenverfahren nach Fahrweise 1 oder 2 wird in der ersten Stufe permanent mit einem NCO-Überschuß gearbeitet. Bei beiden Fahrweisen ist es möglich, in einem Teil des Lösungsmittels die Reaktion zu beginnen und das restliche Lösungsmittel während oder nach der Reaktion zuzugeben.

Als Lösungsmittel für die Herstellung der Polyurethane wird vorzugsweise Tetrahydrofuran verwendet. Die Polyurethane können auch in anderen polaren Lösungsmitteln, wie Dioxan, Cyclohexanon, Dimethylformamid, N-Methylpyrrolidon. Dimethylsulfoxid oder Ethylglykolacetat hergestellt werden. Ebenso ist es möglich, die genannten Lösungsmittel mit Aromaten, wie Toluol oder Xylol, und Estem, wie Ethyl- oder Butylacetat, zu mischen.

Das in den erfindungsgemäßen magnetischen Aufzeichnungsträgern eingesetzte thermoplastische Polyurethanpräpolymer B) ist in den üblichen polaren Lösungsmitteln, wie Ethem, z.B. Tetrahydrofuran oder Dioxan, Ketonen, z. B. Methylethylketon oder Cyclohexanon, Estem, z.B. Ethylacetat, oder Kohlenwasserstoffen, z.B. Alkanen oder Aromaten, oder Mischungen dieser Lösungsmittel, löslich. Es eignet sich besonders zur Dispergierung von Magnetpigmenten, insbesondere besonders feinteiligen Magnetpigmenten, wie sie für hochdichte, magnetische Aufzeichnungssysteme, z.B. im Videobereich, im Audiobereich oder im Datenbereich, verwendet werden. Die erhaltenen Magnetdispersionen besitzen gute Fließeigenschaften, und die daraus hergestellten Magnetschichten besitzen hohe Glanzwerte. Darüber hinaus erfüllen sie auch die übrigen Anforderungen an Bindemittelkomponenten für Magnetschichten, nämlich gute Dispergierwirkung und schnelle Dispergierung, gute Stabilisierung der Dispersion, geringer Lösungsmittelbedarf bei der Herstellung der Dispersion, guter Verlauf beim Vergießen der Dispersion, hohe Pigmentfüllung der Schicht, gute Richtbarkeit der Magnetnadeln und gute mechanische Eigenschaften der Magnetschicht, auch bei hohen Temperaturen.

Ein weiterer Gegenstand der Erfindung sind die zuvor beschriebenen, im Wesentlichen isocyanatgruppenfreien Polyurethanpräpolymere B), die wenigstens eine primäre und/oder sekundäre Aminogruppe und wenigstens zwei Hydroxylgruppen aufweisen. Gegenstand der Erfidnung sind auch die zuvor beschriebenen Verfahren zur Herstellung der Präpolymere B). Gegenstand der Erfindung ist auch die Verwendung dieser Polyurethanpräpolymere als Bindemittelkomponente zur Vernetzung mit einer Isocyanatkomponente sowie als alleiniges Bindemittel für magnetische Aufzeichnungsträger und in Beschichtungsmitteln, z. B. für Papier, Leder, Metalle und Holz.

Die erfindungsgemäß eingesetzten Polyurethane auf Basis der Polyisocyanate A) und von Polyurethanpräpolymeren B) lassen sich als alleinige Bindemittel für die Herstellung von Magnetschichten verwenden, es ist jedoch für spezielle Anwendungszwecke bei magnetischen Aufzeichnungsträgern gemäß der Erfindung vorteilhaft, mindestens eine weitere Bindemittelkomponente in Mengen von weniger als 80 Gewichtsteilen, vorzugsweise weniger als 50 Gewichtsteilen, bezogen auf die resultierenden Gesamtbindemittelmenge, zuzusetzen.

Die gegebenenfalls im Bindemittelgemisch als Cobindemittel enthaltenen physikalisch trocknenden Bindemittel sind bekannt. Es handelt sich hierbei unter anderem um Polyvinylformal-Bindemittel, welche durch Hydrolyse eines Polymerisats eines Vinylesters und anschließende Umsetzung des resultierenden Vinylalkohol-Polymers mit Formaldehyd hergestellt wird. Die Polyvinylformale haben zweckmäßigerweise einen Vinylformalgruppengehalt von mindestens 65 Gew.-% und insbesondere mindestens 80 Gew.-%. Besonders geeignete Polyvinylformale haben einen Gehalt an Vinylalkohol-Gruppen von 5 bis 13 Gew.-%, einen Gehalt an Vinylformal-Gruppen von 80 bis 88 Gew.-%, ein spezifisches Gewicht von ca. 1,2 und eine Viskosität von 50 bis 120 mPas, gemessen bei 20 °C, mit einer Lösung von 5 g Polyvinylformal in 100 ml Phenol-Toluol (1:1). In gleicher Weise geeignet sind neben dem Polyvinylformal Vinylchloriddiolmono- oder -di(meth)acrylat-Copolymerisate, die sich z. B. in an sich bekannter Weise durch Lösungscopolymerisation oder Suspensionscopolymerisation von Vinylchlorid und dem Diolmono(meth)acrylat oder - di(meth)acrylat herstellen lassen. Das hierfür zum Einsatz gelangende Diolmono- oder - diacrylat oder -methacrylat ist ein Veresterungsprodukt von Acrylsäure oder Methacrylsäure mit der entsprechenden molaren Menge an aliphatischem Diol mit 2 bis 4 C-Atomen, wie Ethylenglykol, 1,4-Butandiol und bevorzugt Propandiol, wobei das Propandiol vorzugsweise aus 1,3-Propandiol und 0 bis 50 Gew.-% 1,2-Propandiol besteht. Die Copolymerisate haben zweckmäßigerweise einen Vinylchloridgehalt von etwa 50 bis 95 Gew.-% und einen Diolacrylat- oder -methacrylat-Gehalt von etwa 5 bis 50 Gew.-%. Besonders geeignete Copolymerisate besitzen vorzugsweise einen Gehalt von etwa 70 bis 90 Gew.-% Vinylchlorid und 10 bis 30 Gew.-% Diolmonoacrylat bzw. Diolmonomethacrylat. Eine 15%ige Lösung besonders geeigneter Copolymerisate, wie Vinylchlorid-Propandiolmonoacrylat-Copolymerisate, in einem Gemisch aus gleichen Volumenteilen von Tetrahydrofuran und Dioxan weist bei 25 °C eine Viskosität von etwa 30 mPas auf. Der K-Wert der besonders geeigneten Produkte liegt im allgemeinen zwischen 30 und 50, vorzugsweise bei etwa 40.

Außerdem lassen sich als Cobindemittel vorteilhaft Phenoxyharze mit wiederkehrenden Einheiten der Formel 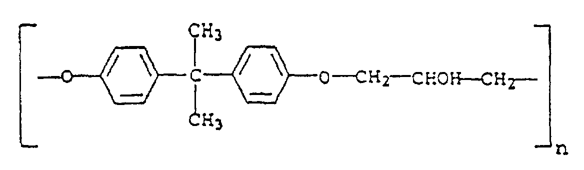 in der n annähernd gleich 100 ist, einsetzen. Es handelt sich hierbei um Polymere, wie sie unter den Handelsbezeichnungen Epikote® der Firma Shell Chemical Co. oder unter der Bezeichnung Epoxidharz PKHH® der Union Carbide Corporation bekannt sind.

In gleicher Weise eignen sich Celluloseester-Bindemittel zur Verwendung in dem bezeichneten Bindemittelgemisch. Dies sind Veresterungsprodukte der Cellulose mit Salpetersäure oder mit Carbonsäuren mit 1 bis 4 Kohlenstoffatomen, wie z. B. Celluloseacetat, Cellulosetriacetat, Celluloseacetopropionat, Celluloseacetobutyrat.

Die Verwendung einer nicht dispergieraktiven Cobindemittel-Komponente, wie z. B. VAGH® , Pioloform® oder PKHH® etc., führt - da der Anteil an dispergieraktivem Polyurethan reduziert wird - zu einer eventuellen Verschlechterung der Dispergierwirkung beziehungsweise der Stabilität der Dispersion.

Als vorteilhaft hat sich die Verwendung von Sulfonatgruppen aufweisenden Vinylchlorid-Copolymeren, z. B. gemäß der US-4,748,084 als Cobindemittel erwiesen, die als Handelsprodukt MR 110® der Fa. Nippon Zeon erhältlich sind.

Nach einer bevorzugten Ausführungsform enthalten die erfindungsgemäß eingesetzten Bindemittel 0 bis 30 % eines Dispergierharzes. Geeignete Dispergierharze sind z.B. in der DE-A-195 16 784 , der DE-A-41 41 838 und der DE-A-44 46 383 beschrieben, auf die hier in vollem Umfang Bezug genommen wird. Diese Polyurethanhamstoffacrylate weisen, entsprechend ihrer stufenweisen Herstellung, eine organophile, polymere Hauptkette auf, die sich an einem ihrer Enden mehrfach verzweigt, wobei die äußersten Zweige saure Gruppen tragen. Bevorzugt werden für die erfindungsgemäß eingesetzten Cobindemittel die Salze dieser Gruppen eingesetzt, um eine Salzbildung zwischen den Aminogruppen des Polyurethanpräpolymers B) und den sauren Gruppen zu vermeiden.

Bevorzugt sind Bindemittel, die 5 bis 25 Gew.-%, bevorzugt 10 bis 20 Gew.-% dieser Dispergierharze, bezogen auf die Gesamtbindemittelmenge, enthalten.

Die weitere Verarbeitung des Bindemittelgemisches mit magnetischen Materialien und Hilfsstoffen zu magnetischen Aufzeichnungsträgem erfolgt in an sich bekannter Weise.

Als anisotrope magnetische Materialien können die an sich bekannten Pigmente verwendet werden, die die Eigenschaften der resultierenden Magnetschichten wesentlich beeinflussen, wie z.B. Gamma-Eisen(III)oxid, feinteiliger Magnetit, ferromagnetisches undotiertes oder dotiertes Chromdioxid, kobaltmodifiziertes Gamma-Eisen(III)oxid, Bariumferrite oder ferromagnetische Metallteilchen. Bevorzugt sind nadelförmiges, insbesondere dedritfreies, kobaltmodifiziertes oder unmodifiziertes Gamma-Eisen(III)oxid sowie ferromagnetisches Chromdioxid und Metallpigment. Die Verwendung von Metallpigment ist besonders bevorzugt. Die spezifische Oberfläche beträgt im allgemeinen mindestens 15 m²/g (BET-Methode) und liegt vorzugsweise im Bereich von 30 bis 200 m²/g.

Die erfindungsgemäßen Bindemittel können in Rezepturen ohne zusätzliche Verwendung von niedermolekularen Dispergiermitteln eingesetzt werden. Es ist aber auch möglich, in untergeordnetem Maße geringe Mengen an Dispergiermittel zuzugeben, wie z.B. Lecithin, Zn-Oleat oder Zn-Stearat.

Ferner können die Magnetschichten in kleinen Mengen Zusätze, wie Gleitmittel und/oder Füllstoffe, enthalten, die bei der Dispergierung der magnetischen Materialien oder bei der Herstellung der Magnetschicht zugemischt werden können. Beispiele solcher Zusätze sind Salze von Fettsäuren oder isomerisierten Fettsäuren, wie Stearinsäure, mit Metallen der ersten bis vierten Hauptgruppe des Periodensystems der Elemente, sowie Fettsäureester, wie Butylstearat, oder Wachse, Siliconöle, Ruß usw. Die Menge der Zusätze ist die an sich übliche, sie liegt im allgemeinen unter 10 Gew.-%, bezogen auf die Gesamtmenge der Magnetschicht.

Das Mengenverhältnis von magnetischem Material zu Bindemittel in den erfindungsgemäßen Aufzeichnungsmaterialien liegt im Bereich von etwa 1 bis 12 und insbesondere 3 bis 8 Gewichtsteilen magnetisches Material auf etwa ein Gewichtsteil des Gesamtbindemittels. Es ist ein besonderer Vorteil, dass aufgrund des vorzüglichen Pigmentbindevermögens der speziellen Polyurethane hohe Magnetmaterialkonzentrationen in den Magnetschichten, z.B. bis zu 90 Gew.-%. bezogen auf das Gesamtgewicht der Magnetschicht, möglich sind, ohne dass die mechanisch-elastischen Eigenschaften verschlechtert oder die Anwendungseigenschaften merklich in Mitleidenschaft gezogen werden.

Als nichtmagnetische und nichtmagnetisierbare Trägermaterialien lassen sich die üblichen starren oder flexiblen Trägermaterialien verwenden, insbesondere Folien aus linearen Polyestern, wie Polyethylenterephthalat, im allgemeinen in Stärken von 2 bis 200 µm und insbesondere von 3 bis 36 µm. Auch die Anwendung der Magnetschichten auf Papierträgern ist möglich.

Ein weiterer Gegenstand der Erfindung ist ein Verfahren zur Herstellung eines magnetischen Aufzeichnungsträgers, das dadurch gekennzeichnet ist, dass man eine gießfähige Mischung aus dem Polyisocyanat A) und der Dispersion des magnetischen Materials in dem Polyurethanpräpolymer B), gegebenenfalls unter Zugabe wenigstens eines weiteren Cobindemittels und/oder weiterer Zusatzstoffe, herstellt und auf das bewegliche nichtmagnetische Trägermaterial aufbringt.

Die Menge an zugesetzter Polyisocyanatkomponente A) richtet sich nach dem zuvor angegebenen Molverhältnis der Isocyanatgruppen von A) zu primären oder sekundären Aminogruppen von B), welches in einem Bereich von etwa 1:0,4 bis 1:0,1, bevorzugt 1:0,3 bis 1:0,15 liegt. Die Menge an zugesetzter Polyisocyanatkomponente A), bezogen auf die aktiven Wasserstoffe, d.h. Hydroxylgruppen und primäre und/oder sekundäre Aminogruppen, des zu vemetzenden Polyurethanpräpolymers B), kann dabei z.B. in einem Unterschuß von bis zu 70 %, vorzugsweise bis zu etwa 50 %, bis hin zu einem Überschuß von bis zu etwa 100 %, vorzugsweise von bis zu 50 %, erfolgen.

Die Herstellung der erfindungsgemäßen magnetischen Aufzeichnungsträger erfolgt in an sich bekannter Weise. Dabei wird in einer Dispergiermaschine, z. B. einer Topfkugelmühle oder einer Rührwerksmühle aus dem magnetischen Material und einer Lösung des Polyurethanpräpolymers B), ggf. des Dispergierharzes, gegebenenfalls unter Zusatz von Gleitmitteln und eventuell geringen Mengen Dispergiermitteln, eine Magnetpigmentdispersion hergestellt. Diese wird nach dem Zumischen der Polyisocyanatkomponente A) filtriert und mit einer üblichen Beschichtungsmaschine, z.B. mittels eines Lineargießers, auf das bewegliche nichtmagnetische Trägermaterial aufgetragen.

Ein bevorzugtes erfindungsgemäßes Bindemittelgemisch enthält 5 bis 25 Gew.-%, bevorzugt 10 bis 20 Gew.-% eines Polyurethanhamstoffacrylats als Dispergierbindemittel.

Die erfindungsgemäß eingesetzten Bindemittel auf Basis eines hydroxylgruppen- und aminogruppenhaltigen Polyurethanpräpolymers B) ermöglichen dabei im allgemeinen eine beschleunigte Anbindung der Polyisocyanatkomponente A), ohne das Bindemittel gleichzeitig zu vernetzen. Die Beschichtungen können daher vorteilhafterweise mit hohen Geschwindigkeiten auf den nichtmagnetischen Träger aufgebracht werden. Anschließend können sie im allgemeinen auch bei Temperaturen, die oberhalb der Schmelztemperatur oder Erweichungstemperatur der Polyisocyanatkomponente A) liegen können, getrocknet, kalandriert und endgehärtet werden. Die gießfähige Mischung aus dem Polyisocyanat A) und der Dispersion des magnetischen Materials in dem Polyurethanpräpolymer B) wird im allgemeinen mit einer Geschwindigkeit im Bereich von 150 bis 1 500 m/min, bevorzugt 300 bis 1 000 m/min, auf das Trägermaterial aufgebracht. In der Regel erfolgt eine magnetische Ausrichtung, bevor die flüssige Beschichtungsmischung auf dem Träger getrocknet wird. Die Temperatur beim Trocknen liegt im allgemeinen in einem Bereich von etwa 60 bis 120 °C, bevorzugt etwa 80 bis 110 °C. Die Verweilzeit des magnetischen Aufzeichnungsträgers im Trockner beträgt dabei im allgemeinen höchstens 15 Sekunden, bevorzugt höchstens 10 Sekunden, insbesondere bevorzugt höchstens 5 Sekunden. Die Magnetschichten können, gegebenenfalls nach einer gewissen Verweilzeit, auf üblichen Kalandriermaschinen mittels Hindurchführen zwischen geheizten und polierten Walzen bei erhöhten Temperaturen und gegebenenfalls unter Anwendung von Druck geglättet und verdichtet werden. Die Temperatur beim Kalandrieren liegt dabei wie beim Trocknen in einem Bereich von etwa 80 bis 120°C, bevorzugt etwa 85 bis 110°C. Im allgemeinen wird der magnetische Aufzeichnungsträger kalandriert, bevor die Vernetzung des Polyurethanbindemittels abgeschlossen ist, da die erfindungsgemäß eingesetzten Polyurethanbindemittel in unvernetztem Zustand sehr thermoplastisch sind, ohne dabei zu verkleben. Die Dicke der Magnetschicht beträgt im allgemeinen etwa 0,5 bis 20 µm, vorzugsweise etwa 1 bis 10 µm. Im Falle der Herstellung von Magnetbändem werden die beschichteten Folien in der Längsrichtung in den üblichen, meist nach Zoll festgelegten Breiten geschnitten.

Die Erfindung wird anhand der folgenden, nicht einschränkenden Beispiele näher erläutert.

### Beispiele

Die in den folgenden Beispielen und Vergleichsbeispielen genannten Teile und Prozente beziehen sich, soweit nichts anderes angegeben, auf das Gewicht.

Die Alkoholzahl wird bestimmt nach DIN 53176.

Die Aminzahl wird bestimmt nach DIN 53240.

Die K-Werte werden gemäß E. Fikentscher, Cellulosechemie 13 (1932), S. 58-64, gemessen.

### Beispiel A

Zu einer Lösung, bestehend aus 0,625 Mol Toluylendiisocyanat (2,4- zu 2,6-Isomerenverhältnis 8:2) und 114 g Tetrahydrofuran wird bei 60°C innerhalb von 2 Stunden eine Lösung von 0,15 Mol eines Polyesters (hergestellt aus Adipinsäure und Butandiol-1,4) mit einem Molekulargewicht von etwa 1 000, 0,25 Mol Diethylenglykol, 0,05 Mol eines Umsetzungsproduktes aus Bisphenol A-diglycidylether und Acrylsäure im Molverhältnis 2 : 1 (50 %-ig in THF), 0,033 Mol Trimethylolpropan und 200 g Tetrahydrofuran zugetropft. Vor Zulaufanfang sowie 1 Stunde nach Zulaufende wird jeweils 1 Tropfen Dibutylzinndilaurat zugegeben. Die Lösung wird bei 60°C gerührt, bis der NCO-Gehalt 1,72 % beträgt. Nun wird auf 45°C abgekühlt und 0,26 Mol Methylethanolamin und anschließend sofort 0,1 Mol Propylamin zugegeben. Das resultierende Produkt weist einen Feststoffgehalt von 51 %, eine Alkoholzahl von 44, eine Aminzahl von 16 und einen K-Wert von 24,5 auf.

### Vergleichsbeispiel VA

Es wurde analog zu Beispiel A verfahren, wobei jedoch die 0,05 Mol des Umsetzungsproduktes aus Bisphenol A durch 0,05 Mol Butandiol-1,3 ersetzt wurden und kein Propylamin zugesetzt wurde. Das resultierende Produkt weist einen Feststoffgehalt von 49,5 %, eine Alkoholzahl von 48, eine Aminzahl von 0 und einen K-Wert von 22,4 auf.

### Beispiel 1

In einer Stahlkugelmühle von 60 l Rauminhalt, gefüllt mit 8 kg Stahlkugeln mit einem Durchmesser von 4-6 mm, wurden 10 000 g eines Co-dotierten Eisenoxidpigments mit einer Koerzitivfeldstärke von 30 kA/m, 11 300 g eines Lösungsmittelgemisches aus gleichen Teilen Tetrahydrofuran und Dioxan, 700 g einer 50 %-igen Lösung eines Polyurethanhamstoffacrylates (Polymer A wie in der DE-A-44 46 383 beschrieben), 2 650 g einer 50 %igen Lösung eines Polyurethanpräpolymers gemäß Beispiel A in Tetrahydrofuran, 10 g eines handelsüblichen Siliconöls, 20 g Hydrochinon, 20 g n-Butylstearat und 100 g Isostearinsäure 70 Stunden lang dispergiert. Die erhaltene Dispersion wurde unter Druck durch einen Filter mit 5 µm-Poren filtriert und unmittelbar vor dem nachfolgenden Auftragen auf eine 12 µm dicke Polyethylenterephthalat-Folie mittels eines üblichen kurzen Linealgießers unter kurzem, kräftigen Rühren (ca. 2 min.) mit 520 g einer 50 %-igen Lösung eines Triisocyanates aus 3 Mol Toluylendiisocyanat und 1 Mol Trimethylolpropan in Ethylacetat versehen. Die Beschichtungsgeschwindigkeit betrug 500 m/min. Die beschichtete Folie wurde nach Durchlaufen eines Magnetfeldes zur Ausrichtung der Magnetpigmentteilchen bei Temperaturen um 90°C zwischen 10 bis 30 Minuten getrocknet. Nach Trocknung wurden 10 000 m der Magnetschicht durch Hindurchführen zwischen auf 90°C beheizten Walzen unter einem Liniendruck von 200 kp/cm mit 300 m/min. verdichtet und geglättet.

### Vergleichsbeispiel V1

Es wurde analog zu Beispiel 1 verfahren, wobei das Polyurethanpräpolymer aus Vergleichsbeispiel VA eingesetzt wurde.

Nach Durchlauf von 10 000 m des magnetischen Aufzeichnungsträgers aus Beispiel 1 auf Basis des erfindungsgemäßen Polyurethanpräpolymers aus Beispiel A wiesen die Kalanderwalzen noch keine Beläge auf.

Bei dem magnetischen Aufzeichnungsträger aus Vergleichsbeispiel V1 auf Basis eines Polyurethanpräpolymers VA, welches lediglich Hydroxylgruppen aufweist, bildete sich bereits nach ca. 1000 m Band ein geringer Belag. Nach ca. 5000 m hatte sich ein so starker Belag gebildet, daß die Kalanderwalzen und die resultierenden Magnetbänder unbrauchbar waren.

In beiden Fällen wurden für den Versuch frisch gereinigte und polierte Kalanderwalzen eingesetzt.

Die Messung der magnetischen Eigenschaften wurde in einem Meßfeld von 160 kA/m durchgeführt. Die Oberflächenrauhigkeit wurde als gemittelte Rauhtiefe R_{z} gemäß DIN 4768, Blatt 1, bestimmt. Bei den Aufzeichnungseigenschaften wurden die elektroakustischen Werte gemäß DIN 45401, 45403 und 45512 (Blatt 12) gegen das Bezugsband IEC I geprüft. Die Meßergebnisse sind in folgender Übersicht enthalten:

Nach der Beschichtung, ohne Oberflächenbehandlung:

| Beispiel Nr. | 1 | V1 |
|---|---|---|
| Rauhigkeit R_{z}: | 0,44 µm | 0,41 µm |
| Remanente Magnetisierung: | 152 mT | 154 mT |

Nach der Verdichtung:

| Beispiel Nr. | 1 | V1 |
|---|---|---|
| Rauhigkeit R_{z} [µm]: | 0,17 m | 0,48 |
| Remanente Magnetisierung: | 185 mT | 183 mT |

Elektroakustische Banddaten (Bezugsband IEC 1):

| Beispiel | 1 | V1 |
|---|---|---|
| Höhenempfindlichkeit E_{H} 10 kHz (Δ dB): | 2,3 | - 0,5 |
| Höhenaussteuerbarkeit A_{H} 10 kHz (Δ dB): | 1,6 | - 1,1 |
| Magnetschichtdicke [µm]: | 5,1 | 5,3 |

### Beispiel B

0,65 Mol Toluylendiisocyanat, gelöst in 115 g Tetrahydrofuran, wurden auf 60°C erhitzt und mit einem Tropfen Dibutylzinndilaurat versetzt. Dazu wurden innerhalb von 2,5 Stunden 0,15 Mol eines hydroxylgruppenhaltigen Polyesters aus Adipinsäure und Butandiol-1,4 mit einem Molekulargewicht von etwa 1000, 0,3 Mol Hexandiol und 0,05 Mol eines hydroxylgruppenhaltigen Polyepoxides (1,8 Epoxidgruppen pro Molekül, 2,8 OH-Gruppen pro Molekül, Epixote®-1001 der Firma Shell) gelöst in 200 g Tetrahydrofuran gegeben. Nach einer Stunde wurde nochmals ein Tropfen Dibutylzinndilaurat zugegeben. Nach Erreichen eines NCO-Gehaltes von 1,05 % wurde auf 45°C abgekühlt und danach 0,15 Mol Diethanolamin und anschließend sofort 0,08 Mol Propylamin zugesetzt. Das resultierende Produkt wies einen Feststoffgehalt von 50,5 %, eine Alkoholzahl von 55, eine Aminzahl von 14 und einen K-Wert von 27 auf.

### Vergleichsbeispiel VB 1

Es wurde analog zu Beispiel B vorgegangen, jedoch wurde anstelle von 0,05 Mol des hydroxylgruppenhaltigen Polyepoxids die gleiche Molmenge an Trimethylolpropan zugesetzt. Das resultierende Produkt wies einen Feststoffgehalt von 49,6 %, eine Alkoholzahl von 53, eine Aminzahl von 0 und einen K-Wert von 25 auf.

### Beispiel 2 (erfindungsgemäß)

In einer Stahlkugelmühle von 100 000 Volumenteilen wurden 100 000 Teile Stahlkugeln, 6 200 Teile der in Beispiel B angegebenen 50 %-igen Lösung des Polyurethanpräpolymers, 1000 Teile eines Polyurethanhamstoffacrylates (Polymer C wie in der DE-A-44 46 383 beschrieben), 166 Teile Gleitmittel, 16 000 Teile eines ferromagnetischen Chromdioxidpigments mit einer mittleren Teilchengröße von 0,5 µm und einer Koerzitivkraft von 50 kA/m und 18 000 Teile Tetrahydrofuran eingefüllt und etwa 24 Stunden dispergiert. Die Magnetdispersion wurde sodann unter Druck durch einen Filter von 5 µm Porenweite filtriert und unmittelbar vor dem nachfolgenden Auftragen auf eine 15 µm starke Polyethylenterephthalat-Folie unter kurzem Rühren bis zur Beschichtung (ca. 2 bis 20 min.) mit 220 Teilen einer 75 %-igen Lösung von Triisocyanat aus 3 Mol Toluylendiisocyanat versehen. Die beschichtete Folie wurde nach Durchlaufen eines Magnetfeldes zur Ausrichtung der Magnetpigmentteilchen bei einer Temperatur zwischen 90 und 100°C getrocknet (Trocknerlänge 30 m, Beschichtungsgeschwindigkeit 450 m/min). Durch Hindurchführen zwischen zwei beheizten Kalanderwalzen (Temperatur 90°C, Kalandriergeschwindigkeit 300 m/min., Liniendruck 220 kg/cm) wurde die Magnetschicht verdichtet und geglättet. Die Verweilzeit zwischen Beschichten und Kalandrieren betrug 30 Minuten. Die Dicke der Magnetschicht beträgt 4 µm. Die beschichtete Folie von ca. 11 000 m wurde anschließend in Bänder von ½ Zoll Breite geschnitten.

### Vergleichsbeispiel V2a

Analog zu Beispiel 2 wurde ein Magnetband hergestellt, wobei anstatt des Polyurethanpräpolymers aus Beispiel 1 eine 50 %ige Lösung des Polyurethanpräpolymers aus Beispiel VB1 eingesetzt wurde.

### Vergleichsbeispiel V2b

Analog zu Beispiel V2a wurde ein Magnetband hergestellt, wobei die beschichtete Folie bei einer Temperatur von 80°C getrocknet wurde (Trocknerlänge 30 m, Beschichtungsgeschwindigkeit 100 m/min). Die Verweilzeit zwischen Beschichten und Kalandrieren betrug 20 Minuten (Kalandrierbedingungen 80 m/min bei 60°C).

Der Zustand der Kalanderwalzen der Beispiele 2, V2a und V2b ist in der folgenden Tabelle 1 wiedergegeben.

**Tabelle 1**

| Beispiel Nr. | Kalanderbeläge bei 100 m Bandlauf | 4000 m Bandlauf | 8000 m Bandlauf |
|---|---|---|---|
| 2 | nicht sichtbar | nicht sichtbar | nicht sichtbar |
| V2a | nicht sichtbar | sichtbar | sehr starke Beläge, Walze muß gereinigt werden |
| V2b | nicht sichtbar | nicht sichtbar | nicht sichtbar |

Wie die Ergebnisse in Tabelle 1 belegen, eignen sich die erfindungsgemäß eingesetzten Bindemittel auf Basis eines hydroxylgruppen- und aminogruppenhaltigen Polyurethanpräpolymers zur Herstellung von magnetischen Aufzeichnungsträgern bei hohen Beschichtungs- und Kalandriergeschwindigkeiten und hohen Temperaturen. Bei Verwendung von bekannten Polyurethanpräpolymeren lassen sich annähemd gute Ergebnisse nur bei deutlich geringeren Bandgeschwindigkeiten und niedrigeren Beschichtungs- und Kalandriertemperaturen erzielen (V2b).

An den magnetischen Aufzeichnungsträgem aus den Beispielen 2, V2a und V2b wurden auf einem VHS-Recorder der Firma Victor Company of Japan gegen das Bezugsband (OdB) folgende Messungen durchgeführt:
(1) Videostörabstand (Video SN): Verhältnis des Luminanzsignals eines 100% Weißbildes zum Rauschpegel, gemessen mit dem Störspannungsmeter UPSF der Firma Rohde und Schwarz (> 100 kHz).
(2) Fehlerzahl: Anzahl der Pegeleinbrüche von 20dB mit einer Dauer von mehr als 15 µsec. pro Minute.

Die Meßergebnisse sind in Tabelle 2 angegeben.

Es wurde ein Band jeweils nach einer durchlaufenen Kalandrierstrecke von 8000 m eingesetzt.

| Beispiel Nr. | Video S/N [dB] | Fehlerzahl [l/min] |
|---|---|---|
| 2 | 3 | 13 |
| V2a | -2 | 150 |
| V2b | 1,5 | 16 |

Wie die Ergebnisse in Tabelle 2 belegen, eignen sich die erfindungsgemäß eingesetzten Bindemittel auf Basis eines hydroxylgruppen- und aminogruppenhaltigen Polyurethanpräpolymers zum Herstellen von fehlerarmen magnetischen Aufzeichnungsträgem bei hohen Beschichtungs- und Kalandriergeschwindigkeiten und hohen Temperaturen. Annähernd gleich gute Fehlerzahlen werden mit Bindemitteln auf Basis eines ausschließlich hydroxylgruppenhaltigen Polyurethanpräpolymers nur bei deutlich geringeren Bandgeschwindigkeiten sowie niedrigen Beschichtungs- und Kalandriertemperaturen (V2b) erzielt.

### Beispiel C

0,625 Mol Toluylendiisocyanat, gelöst in 108 g Tetrahydrofuran, wurden auf 60°C erhitzt und mit einem Tropfen Dibutylzinndilaurat versetzt. Dazu wurden innerhalb von 2,5 Stunden 0,15 Mol eines OH-gruppenhaltigen Polyesters aus Adipinsäure und Butandiol-1,4 mit einem Molekulargewicht von 1000, 0,3 Mol Ethylenglykol, 0,033 Mol Trimethylolpropan und 0,05 Mol eines Reaktionsprodukts aus Bisphenol A-diglycidylether und Acrylsäure im Molverhältnis 2:1 (50 %-ig in THF), gelöst in 200 g Tetrahydrofuran gegeben. Nach einer Stunde wurde nochmals ein Tropfen Dibutylzinndilaurat zugegeben. Nach Erreichen eines NCO-Gehaltes von 1,78% wurde auf 45°C abgekühlt, und danach wurden 0,19 Mol Diethanolamin und unmittelbar anschließend 0,06 Mol 4-Amino-2,6-Diisopropyl-piperidin zugesetzt. Das resultierende Produkt wies einen Feststoffgehalt von 50 %, eine OH-Zahl von 55, eine Aminzahl von 18,5 und einen K-Wert von 24 auf.

### Vergleichsbeispiel VC

Es wurde analog zu Beispiel C vorgegangen, wobei anstelle des Gemisches aus Diethanolamin und 4-Amino-2,6-dimethyldiperidin eine entsprechende Menge an Methylethanolamin zugegeben wurde. Das resultierende Produkt wies einen Feststoffgehalt von 50 %, eine Alkoholzahl von 72, keine primären oder sekundären Aminogruppen und einen K-Wert von 25 auf.

### Beispiel 3

In einer Stahlkugelmühle von 600 Volumenteilen, gefüllt mit 600 kg Stahlkugeln mit einem Durchmesser zwischen 4 und 6 mm. wurden 102 kg Tetrahydrofuran, 22 kg einer 50 %-igen Lösung der Polyhamstoffurethane gemäß Beispiel C, 30 kg eines 50 %-igen Polyurethanhamstoffacrylates (Polymer A wie in der DE-A-44 46 383 beschrieben), 12 kg eines 25 %-igen Polyvinylformals (Pioloform FN 65 der Fa. Wacker Chemie) , 100 kg eines ferromagnetischen Chromdioxids mit einer mittleren Nadellänge von 0,5 µm, 2,5 kg Zinkoleat, 0,25 kg eines handelsüblichen Siliconöls sowie 1 kg n-Butylstearat eingefüllt und der Ansatz etwa 36 Stunden dispergiert. Die Dispersion wurde dann unter Druck filtriert und unmittelbar vor dem nachfolgenden Auftragen auf eine 15 µm starke Polyethylenterephthalat-Folie unter Rühren mit, bezogen auf ein Teil Dispersion, 0,037 Teilen einer 50%-igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei einer Temperatur zwischen 80 und 100°C getrocknet und durch Hindurchführen (400 m/Min.) zwischen zwei beheizten Walzen unter Druck (90°C, Liniendruck 220 kg/cm) geglättet. Die Verweilzeit zwischen Beschichten und Kalandrieren betrug 30 Minuten.

Die Messung der magnetischen Eigenschaften wurde in einem Meßfeld von 160 kA/m durchgeführt: Die remanente Magnetisierung betrug 190 mT und die Ausrichtung der magnetischen Teilchen, d.h. das Verhältnis der remanenten Magnetisierung längs zu quer, 3,0. Nach dem Schneiden von 3,81 mm breiten Bändern wurden die elektroakustischen Werte gemäß DIN 45401, 45403 und 45512 (Blatt 12) gegen das Bezugsband (IEC II) geprüft. Die Meßergebnisse sind in Tabelle 3 angegeben.

### Vergleichsbeispiel V3

Es wurde analog zu Beispiel 3 verfahren, wobei das Polyurethanpräpolymer aus Vergleichsbeispiel VC eingesetzt wurde.

### Beispiel D

53,1 g Toluylendiisocyanat und 75 g Diphenylmethyldiisocyanat, gelöst in 229 g Tetrahydrofuran, wurden auf 60°C erhitzt und mit einem Tropfen Dibutylzinndilaurat versetzt. Dazu wurden innerhalb von 2.5 Stunden 250 g eines OH-gruppenhaltigen Polyesters aus Adipinsäure und Butandiol-1,4 mit einem Molekulargewicht von 1000, 27,7 g Hexandiol und 1,34 g Trimehylolpropan, gelöst in 200 g Tetrahydrofuran, gegeben. Nach einer Stunde wurde nochmals ein Tropfen Dibutylzinndilaurat zugegeben. Nach Erreichen eines NCO-Gehaltes von 1,05 % wurde auf 45°C abgekühlt und danach 14,7 g Diethanolamin und 12,88 g 4-Amino-2,6-Diisopropylpiperidin zugesetzt. Das resultierende Produkt wies einen Feststoffgehalt von 50 %, eine Alkoholzahl von 37, eine Aminzahl von 9 und einen K-Wert von 30 auf.

### Vergleichsbeispiel VD

Es wurde analog zu Beispiel D vorgegangen, wobei anstelle des Gemisches aus Diethanolamin und 4-Amino-2,6-diisopropylpiperidin eine entsprechende Menge an N-Methylethanolamin zugegeben wurde Das resultierende Produkt wies einen Feststoffgehalt von 51 %, eine Alkoholzahl von 46, eine Aminzahl von 0 und einen K-Wert von 29 auf.

### Beispiel 4

Es wurde wie in Beispiel 3 beschrieben verfahren, jedoch wurde anstelle des Polyurethanpräpolymers gemäß Beispiel C dieselbe Menge eines gemäß Beispiel C erhaltenen Produkts eingesetzt.

### Vergleichsbeispiel V4

Es wurde analog zu Beispiel 3 verfahren, wobei das Polyurethanpräpolymer aus Vergleichsbeispiel VD eingesetzt wurde.

Die Kalanderwalzen bei den Vergleichsversuchen V3 und V4 waren stark belegt und unbrauchbar. Sie mußten gereinigt und poliert werden. Bei den erfindungsgemäßen Beispielen 3 und 4 gab es keine Kalanderbeläge.

Die Messung der magnetischen Eigenschaften erfolgte wie in Beispiel 3 beschrieben. Die Meßergebnisse sind in Tabelle 3 angegeben.

**Tabelle 3**

| Messung der Bandeigenschaften nach 9000 m Kalandrierstrecke | | | | |
|---|---|---|---|---|
| Beispiel Nr. | 3 | 4 | V3 | V4 |
| Schichtdicke [µm] | 4,0 | 4,2 | 4,2 | 4,1 |
| Höhenempfindlichkeit E_{H} 10 kHz | +1,2 | +1,3 | -3,5 | -2,8 |
| Gemittelte Rauhtiefe R_{z} | 0,16 | 0,17 | 0,51 | 0,53 |

Die mit den Vergleichsbeispielen V3 und V4 erhaltenen magnetischen Aufzeichnungsträger sind demnach sehr fehlerhaft und unbrauchbar.

## Patentansprüche

1. Magnetischer Aufzeichnungsträger, umfassend ein nichtmagnetisches Trägermaterial und darauf aufgebracht wenigstens eine Magnetschicht, welche ein feinverteiltes magnetisches Material in einem Bindemittel dispergiert enthält, wobei das Bindemittel wenigstens ein Polyurethanharz PU) enthält, welches durch Vernetzung wenigstens eines Polyisocyanates A) mit wenigstens einem isocyanatgruppenfreien, wenigstens 3 aktive Wasserstoffatome enthaltenden Polyurethanpräpolymer B) erhältlich ist, **dadurch gekennzeichnet, dass** das Polyurethanpräpolymer B) wenigstens zwei Hydroxylgruppen und wenigstens eine primäre und/oder sekundäre Aminogruppe aufweist.

2. Magnetischer Aufzeichnungsträger nach Anspruch 1, **dadurch gekennzeichnet, dass** das Bindemittel zusätzlich wenigstens ein Dispergierharz enthält.

3. Magnetischer Aufzeichnungsträger nach Anspruch 1 oder 2, **dadurch gekennzeichnet, dass** das Bindemittel zusätzlich wenigstens ein physikalisch trocknendes Cobindemittel enthält.

4. Magnetischer Aufzeichnungsträger nach einem der Ansprüche bis 3, **dadurch gekennzeichnet, dass** das Polyisocyanat A) ausgewählt ist unter Verbindungen mit 2 bis 5 Isocyanatgruppen, Isocyanatpräpolymeren mit einer mittleren Anzahl von 2 bis 5 Isocyanatgruppen, und Mischungen davon.

5. Magnetischer Aufzeichnungsträger nach einem der vorhergehenden Ansprüche, **dadurch gekennzeichnet, dass** das Polyisocyanat A) eine Schmelztemperatur oder Erweichungstemperatur von höchstens 100°C, bevorzugt höchstens 80°C, aufweist.

6. Magnetischer Aufzeichnungsträger nach einem der vorhergehenden Ansprüche, **dadurch gekennzeichnet, dass** das Polyurethanpräpolymer B) eine Alkoholzahl im Bereich von 20 bis 120, bevorzugt 25 bis 100, aufweist.

7. Magnetischer Aufzeichnungsträger nach einem der vorhergehenden Ansprüche, **dadurch gekennzeichnet, dass** das Polyurethanpräpolymer B) eine Aminzahl im Bereich von 6 bis 45, bevorzugt 8 bis 25, aufweist.

8. Magnetischer Aufzeichnungsträger nach einem der vorhergehenden Ansprüche, **dadurch gekennzeichnet, dass** das Polyurethanpräpolymer B) ein zahlenmittleres Molekulargewicht im Bereich von 500 bis 60 000, bevorzugt 1 000 bis 50 000, aufweist.

9. Magnetischer Aufzeichnungsträger nach einem der vorhergehenden Ansprüche, **dadurch gekennzeichnet, dass** mindestens 50 %, bevorzugt mindestens 70 %, insbesondere mindestens 80 % der Hydroxylgruppen des Polyurethanpräpolymers B) Teil einer Harnstoffgruppe der Formel
-NH-CO-NR¹-R²-OH
oder 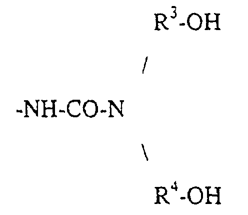 sind, worin
R¹ für Wasserstoff oder einen C₁- bis C₄-Alkylrest, be-vorzugt C₁- bis C₂-Alkyl, steht, und
R², R³ und R⁴ unabhängig voneinander für geradkettige oder verzweigte C₁- bis C₁₀-Alkylreste stehen.

10. Magnetischer Aufzeichnungsträger nach einem der vorhergehenden Ansprüche, **dadurch gekennzeichnet, dass** das Polyurethanpräpolymer B) aufgebaut ist aus mindestens einem Diisocyanat und Verbindungen, die ein oder mehrere aktive Wasserstoffatome pro Molekül enthalten, nämlich
(i) wenigstens einer Aminkomponente, ausgewählt unter
a) Aminen mit 1 bis 10, bevorzugt 1 bis 4, primären und/oder sekundären Aminogruppen pro Molekül, und
b) Polyaminen mit mindestens 2 primären und/oder sekundären Amino gruppen; und
(ii) wenigstens einer Alkoholkomponente, ausgewählt unter
c) Diolen mit 2 bis 18 Kohlenstoffatomen,
d) Aminoalkoholen mit mindestens einer primären oder Sekundären Aminogruppe, und
e) Triolen und/oder Polyolen mit 3 bis 25 Kohlenstoffatomen, und gegebenenfalls
(iii) wenigstens einer weiteren reaktiven Komponente, ausgewählt unter
f) Verbindungen mit mindestens zwei endständigen Hydroxylgruppen und ggf. mindestens einer weiteren funktionellen Gruppe, ausgewählt unter α,β-ethylenisch ungesättigten Doppelbindungen und Epoxyfunktionen, und
g) Polymeren mit mindestens zwei endständigen Hydroxyl- und/oder Aminogruppen, die zusätzlich wenigstens eine polare funktionelle Gruppe aufweisen, die ausgewählt ist unter den Alkalimetall-, Erdalkalimetall- und Ammoniumsalzen von Carbonsäuregruppen, Sulfonsäuregruppen. Phosphonsäuregruppen und Phosphorsäure gruppen, Aminogruppen und quaternären Ammoniumgruppen.

11. Magnetischer Aufzeichnungsträger nach Anspruch 10, **dadurch gekennzeichnet, dass** die Komponente c) in einer Menge bis zu 20 Gew.-%, bevorzugt bis zu 10 Gew.-%, durch Diamine und/oder Wasser ersetzt wird.

12. Magnetischer Aufzeichnungsträger nach einem der vorher-gehenden Ansprüche, **dadurch gekennzeichnet, dass** das Mol-mengenverhältnis der Isocyanatgruppen von A) zu primären oder sekundären Aminogruppen von B) 1:0,4 bis 1:0,1, be-vorzugt 1:0,3 bis 1:0,15 beträgt.

13. Verfahren zur Herstellung eines magnetischen Aufzeichnungsträgers nach einem der Ansprüche 1 bis 12, **dadurch gekennzeichnet, dass** man eine gießfähige Mischung aus dem Polyisocyanat A) und der Dispersion des magnetischen Materials in dem Polyurethanpräpolymer B), gegebenenfalls unter Zugabe wenigstens eines weiteren Cobindemittels und/oder Dispergierharzes und/oder weiterer Zusatzstoffe, herstellt und auf das bewegliche, nichtmagnetische Trägermaterial aufbringt.

14. Verfahren nach Anspruch 13, **dadurch gekennzeichnet, dass** man die gießfähige Mischung mit einer Geschwindigkeit im Bereich von 150 bis 1 500 m/min, bevorzugt 300 bis 1 000 m/min, auf das Trägermaterial aufbringt.

15. Verfahren nach einem der Ansprüche 13 oder 14, **dadurch gekennzeichnet, dass** man die auf das Trägermaterial aufgebrachte Mischung bei erhöhten Temperaturen trocknet und kalandriert.

16. Verfahren nach Anspruch 15, **dadurch gekennzeichnet, dass** die Temperatur beim Trocknen und/oder Kalandrieren in einem Bereich von 60 bis' 120 °C, bevorzugt 80 bis 110 °C, liegt.

17. Isocyanatgruppenfreies Polyurethanpräpolymer B) gemäß der Definition, wie in einem der Ansprüche 6 bis 11.

18. Verwendung eines Polyurethanpräpolymers nach Anspruch 17 zur Herstellung eines Bindemittels, vorzugsweise für magnetische Aufzeichnungsträger.

19. Verwendung eines Polyurethanpräpolymers nach Anspruch 17 als Bindemittel für magnetische Aufzeichnungsträger und in Beschichtungsmitteln für Papier, Leder, Metalle und Holz.

## Claims

1. A magnetic recording medium comprising a nonmagnetic substrate material and, applied thereon, at least one magnetic layer which contains a finely divided magnetic material dispersed in a binder, the binder containing at least one polyurethane resin PU) which is obtainable by crosslinking at least one polyisocyanate A) with at least one isocyanate-free polyurethane prepolymer B) containing at least 3 active hydrogen atoms, wherein the polyurethane prepolymer B) has at least two hydroxyl groups and at least one primary and/or secondary amino group.

2. A magnetic recording medium as claimed in claim 1, wherein the binder additionally contains at least one dispersing resin.

3. A magnetic recording medium as claimed in claim 1 or 2, wherein the binder additionally contains at least one physically drying cobinder.

4. A magnetic recording medium as claimed in any of claims 1 to 3, wherein the polyisocyanate A) is selected from compounds having 2 to 5 isocyanate groups, isocyanate prepolymers having an average number of 2 to 5 isocyanate groups, and mixtures thereof.

5. A magnetic recording medium as claimed in any of the preceding claims, wherein the polyisocyanate A) has a melting point or softening temperature of not more than 100°C, preferably not more than 80°C.

6. A magnetic recording medium as claimed in any of the preceding claims, wherein the polyurethane prepolymer B) has an alcohol number of from 20 to 120, preferably from 25 to 100.

7. A magnetic recording medium as claimed in any of the preceding claims, wherein the polyurethane prepolymer B) has an amine number of from 6 to 45, preferably from 8 to 25.

8. A magnetic recording medium as claimed in any of the preceding claims, wherein the polyurethane prepolymer B) has a number average molecular weight of from 500 to 60,000, preferably from 1000 to 50,000.

9. A magnetic recording medium as claimed in any of the preceding claims, wherein at least 50%, preferably at least 70%, in particular at least 80%, of the hydroxyl groups of the polyurethane prepolymer B) are part of a urea group of the formula
-NH-CO-NR¹-R²-OH
or 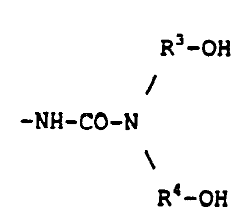 where
R¹ is hydrogen or C₁- to C₄-alkyl, preferably C₁- or C₂-alkyl, and
R², R³ and R⁴, independently of one another, are each straight-chain or branched C₁- to C₁₀-alkyl.

10. A magnetic recording medium as claimed in any of the preceding claims, wherein the polyurethane prepolymer B) is composed of at least one diisocyanate and compounds which contain one or more active hydrogen atoms per molecule, i.e.
(i) at least one amine component selected from:
a) amines having from 1 to 10, preferably from 1 to 4, primary and/or secondary amino groups per molecule, and
b) polyamines having at least 2 primary and/or secondary amino groups; and
(ii) at least one alcohol component, selected from
c) diols of 2 to 18 carbon atoms,
d) amino alcohols having at least one primary or secondary amino group, and
e) triols and/or polyols of 3 to 25 carbon atoms; and, if required,
(iii) at least one further reactive component, selected from
f) compounds having at least two terminal hydroxyl groups and, if required, at least one further functional group selected from α,β-ethylenically unsaturated double bonds and epoxy functions, and
g) polymers having at least two terminal hydroxyl and/or amino groups, which additionally have at least one polar functional group which is selected from the alkali metal, alkaline earth metal and ammonium salts of carboxylic acid groups, sulfonic acid groups, phosphonic acid groups and phosphoric acid groups, amino groups and quaternary ammonium groups.

11. A magnetic recording medium as claimed in claim 10, wherein up to 20, preferably up to 10, % by weight of the component c) are replaced by diamines and/or water.

12. A magnetic recording medium as claimed in any of the preceding claims, wherein the molar ratio of the isocyanate groups of A) to primary or secondary amino groups of B) is from 1:0.4 to 1:0.1, preferably from 1:0.3 to 1:0.15.

13. A process for the production of a magnetic recording medium as claimed in any of claims 1 to 12, wherein a castable mixture of the polyisocyanate A) and the dispersion of the magnetic material in the polyurethane prepolymer B), with or without the addition of at least one further cobinder and/or dispersing resin and/or further additives, is prepared and is applied to the mobile, nonmagnetic substrate material.

14. A process as claimed in claim 13, wherein the castable mixture is applied to the substrate material at a speed of from 150 to 1500 m/min, preferably from 300 to 1000 m/min.

15. A process as claimed in either of claims 13 and 14, wherein the mixture applied to the substrate material is dried and calendered at elevated temperatures.

16. A process as claimed in claim 15, wherein the temperature during drying and/or calendering is from 60 to 120°C, preferably from 80 to 110°C.

17. An isocyanate-free polyurethane prepolymer B) as defined in any of claims 6 to 11.

18. The use of a polyurethane prepolymer as claimed in claim 17 for the preparation of a binder, preferably for magnetic recording media.

19. The use of a polyurethane prepolymer as claimed in claim 17 as a binder for magnetic recording media and in coating materials for paper, leather, metals and wood.

## Revendications

1. Support d'enregistrement magnétique comprenant un matériau de support et, appliquée sur celui-ci, au moins une couche magnétique qui contient un matériau magnétique finement divisé, dispersé dans un liant, le liant contenant au moins une résine polyuréthanne (PU) qui peut être obtenue par réticulation d'au moins un polyisocyanate A) avec au moins un prépolymère polyuréthanne B) exempt de groupes isocyanate, contenant au moins 3 atomes d'hydrogène actifs, **caractérisé en ce que** le prépolymère polyuréthanne comporte au moins deux groupes hydroxy et au moins un groupe amino primaire et/ou secondaire.

2. Support d'enregistrement magnétique selon la revendication 1, **caractérisé en ce que** le liant contient en outre au moins une résine en dispersion.

3. Support d'enregistrement magnétique selon la revendication 1 ou 2, **caractérisé en ce que** le liant en outre contient au moins un co-liant à séchage physique.

4. Support d'enregistrement magnétique selon l'une quelconque des revendications 1 à 3, **caractérisé en ce que** le polyisocyanate A) est choisi parmi des composés comportant de 2 à 5 groupes isocyanate, des prépolymères d'isocyanate comportant un nombre moyen de 2 à 5 groupes isocyanate, et des mélanges de ceux-ci.

5. Support d'enregistrement magnétique selon l'une quelconque des revendications précédentes, **caractérisé en ce que** le polyisocyanate A) a une température de fusion ou une température de ramollissement d'au maximum 100°C, de préférence d'au maximum 80°C.

6. Support d'enregistrement magnétique selon l'une quelconque des revendications précédentes, **caractérisé en ce que** le prépolymère polyuréthanne B) présente un indice d'alcool dans la plage de 20 à 120, de préférence, de 25 à 100.

7. Support d'enregistrement magnétique selon l'une quelconque des revendications précédentes, **caractérisé en ce que** le prépolymère polyuréthanne B) présente un indice d'amine dans la plage de 6 à 45, de préférence, de 8 à 25.

8. Support d'enregistrement magnétique selon l'une quelconque des revendications précédentes, **caractérisé en ce que** le prépolymère polyuréthanne B) présente une masse moléculaire moyenne en nombre dans la plage de 500 à 60 000, de préférence, de 1 000 à 50 000.

9. Support d'enregistrement magnétique selon l'une quelconque des revendications précédentes, **caractérisé en ce qu'**au moins 50 %, de préférence au moins 70 %, en particulier au moins 80 % des groupes hydroxy du prépolymère polyuréthanne B) font partie d'un groupe urée de formule
-NH-CO-NR¹-R²-OH
ou 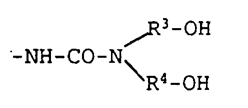 formules dans lesquelles
R¹ représente un atome d'hydrogène ou un radical alkyle en C₁-C₄, de préférence un radical alkyle en C₁-C₂,
R², R³ et R⁴ représentent, indépendamment les uns des autres, des radicaux alkyle en C₁-C₁₀ à chaîne droite ou ramifiés.

10. Support d'enregistrement magnétique selon l'une quelconque des revendications précédentes, **caractérisé en ce que** le prépolymère B) polyuréthanne B) est synthétisé à partir d'au moins un diisocyanate et de composés qui contiennent un ou plusieurs molécules d'hydrogène actif par molécule, à savoir
(I) au moins un composant de type amine, choisi parmi
a) des amines comportant de 1 à 10, de préférence, de 1 à 4 groupes amino primaires et/ou secondaires par molécule, et
b) des polyamines comportant au moins 2 groupes amino primaires et/ou secondaires ; et
(II) au moins un composant de type alcool, choisi parmi
c) des diols ayant de 2 à 18 atomes de carbone,
d) des amino-alcools comportant au moins un groupe primaire ou secondaire, et
e) des triols et/ou des polyols ayant de 3 à 25 atomes de carbone, et éventuellement
(III) au moins un autre composant réactif, choisi parmi
f) des composés comportant au moins deux groupes hydroxy en bout de chaîne et éventuellement au moins un autre groupe fonctionnel choisi parmi des doubles liaisons à insaturation *α,*β-éthylénique et des fonctions époxy, et
g) des polymères comportant au moins deux groupes hydroxy et/ou amino en bout de chaîne, qui en outre comportent au moins un groupe fonctionnel polaire qui est choisi parmi les sels alcalins, alcalino-terreux et d'ammonium de groupes acide carboxylique, acide sulfonique, acide phosphonique et acide phosphorique, des groupes amino et des groupes ammonium quaternaires.

11. Support d'enregistrement magnétique selon la revendication 10, **caractérisé en ce que** le composant c) est remplacé en une proportion allant jusqu'à 20 % en poids, de préférence, jusqu'à 10 % en poids, par des diamines et/ou l'eau.

12. Support d'enregistrement magnétique selon l'une quelconque des revendications précédentes, **caractérisé en ce que** le rapport molaire des groupes isocyanate de A) aux groupes amino primaires ou secondaires de B) va de 1:0,4 à 1:0,1, de préférence, de 1:0,3 à 1:0,15.

13. Procédé pour la fabrication d'un support d'enregistrement magnétique selon l'une quelconque des revendications 1 à 12, **caractérisé en ce qu'**on prépare un mélange, apte à l'écoulement, du polyisocyanate A) et de la dispersion du matériau magnétique dans le prépolymère polyuréthanne B), éventuellement avec addition d'au moins un autre co-liant et/ou d'une résine en dispersion et/ou d'autres additifs, et on l'applique sur le matériau de support non magnétique, mobile.

14. Procédé selon la revendication 13, **caractérisé en ce que** le mélange apte à l'écoulement est appliqué sur le matériau de support à une vitesse dans la plage de 150 à 1 500 m/min, de préférence, de 300 à 1 000 m/min.

15. Procédé selon la revendication 13 ou 14, **caractérisé en ce que** le mélange appliqué sur le matériau de support est séché et calandré à des températures élevées.

16. Procédé selon la revendication 15, **caractérisé en ce que** la température lors du séchage et/ou du calandrage se situe dans une plage de 60 à 120°C, de préférence, de 80 à 110°C.

17. Prépolymère polyuréthanne B) exempt de groupes isocyanate selon la définition telle que donnée dans l'une quelconque des revendications 6 à 11.

18. Utilisation d'un prépolymère polyuréthanne selon la revendication 17, pour la préparation d'un liant, de préférence pour des supports d'enregistrement magnétique.

19. Utilisation d'un prépolymère polyuréthanne selon la revendication 17, en tant que liant pour des supports d'enregistrement magnétique et dans des compositions de revêtement pour papier, cuir, métaux et bois.
